(19)

Europäisches Patentamt

European Patent Office

Office européen des brevets

(11) **EP 4 488 926 A1**

(12) **EUROPEAN PATENT APPLICATION**

(43) Date of publication:
**08.01.2025 Bulletin 2025/02**

(21) Application number: **24180162.0**

(22) Date of filing: **05.06.2024**

(51) International Patent Classification (IPC):
**G06T 3/4038** (2024.01)    **G06T 7/00** (2017.01)

(52) Cooperative Patent Classification (CPC):
**G06T 3/4038; G06T 7/0004;** G06T 2207/10016;
G06T 2207/30168

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.07.2023 JP 2023109352**

(71) Applicants:
- **Kabushiki Kaisha Toshiba
  Tokyo 105-0023 (JP)**
- **Toshiba Information Systems (Japan)
  Corporation
  Kawasaki-shi, Kanagawa 210-8540 (JP)**

(72) Inventors:
- **Kano, Hiroya
  Minato-ku, Tokyo, 105-0023 (JP)**

- **Ohno, Hiroshi
  Minato-ku, Tokyo, 105-0023 (JP)**
- **Okano, Hideaki
  Minato-ku, Tokyo, 105-0023 (JP)**
- **Kamikawa, Takahiro
  Minato-ku, Tokyo, 105-0023 (JP)**
- **Ohno, Akifumi
  Kawasaki-shi, Kanagawa, 210-8540 (JP)**
- **Takagi, Yoshiaki
  Kawasaki-shi, Kanagawa, 210-8540 (JP)**
- **Suzuki, Sayuri
  Kawasaki-shi, Kanagawa, 210-8540 (JP)**
- **Ujihara, Yousuke
  Kawasaki-shi, Kanagawa, 210-8540 (JP)**

(74) Representative: **Hoffmann Eitle
Patent- und Rechtsanwälte PartmbB
Arabellastraße 30
81925 München (DE)**

(54) **PROCESSING APPARATUS, OPTICAL INSPECTION SYSTEM, SUBJECT SURFACE IMAGE COMPOSITION METHOD, SUBJECT SURFACE IMAGE COMPOSITION PROGRAM**

(57)    According to an arrangement, a processing apparatus includes one or more processors. The one or more processors are configured to: shift one or more captured images selected from a plurality of captured images including a reference captured image, and compose at least one subject surface image by superimposing the shifted one or more captured images on the reference captured image. The plurality of captured images have been obtained with an imaging portion within a predetermined time while a surface of a subject moving relative to the illumination light is irradiated with a plurality of beams of illumination light traveling in different directions in at least one plane.

F I G. 1

**EP 4 488 926 A1**

**Description**

FIELD

The present disclosure relates to a processing apparatus, an optical inspection system, a subject surface image composition method, and a subject surface image composition program.

BACKGROUND

In various industrial fields, non-contact inspection of the surface of an object being conveyed has been gaining importance. There is a conventional method of irradiating an object being conveyed with illumination light, capturing an image of a surface of the object with light reflected from the surface of the object using an image capturing element, and analyzing the captured image, thereby inspecting the surface of the object.

BRIEF DESCRIPTION OF THE DRAWINGS

FIG. 1 is a schematic diagram showing an optical inspection system according to a first arrangement.
FIG. 2 is a schematic diagram of an illumination portion shown in FIG. 1, taken along a ZX plane.
FIG. 3 is a schematic diagram showing an example in which a surface of a subject being conveyed on the conveyor portion is imaged by an imaging portion using an optical inspection apparatus according to a comparative example.
FIG. 4 shows an arrangement of images acquired by photographing a surface of a subject at a suitable frame rate using the optical inspection apparatus shown in FIG. 3.
FIG. 5 is a schematic diagram showing a subject in the shape of a flat plate being conveyed by a conveyor portion of an optical inspection system, an optical inspection apparatus configured to optically acquire an image of the subject, and illumination light toward a surface of the subject in the ZX plane according to the first arrangement.
FIG. 6 is a schematic diagram showing a subject, an optical inspection apparatus, and illumination light toward a surface of the subject in an YZ plane, as viewed from a direction denoted by a mark VI in FIG. 5.
FIG. 7 is a schematic diagram different from FIG. 6, showing the subject, the optical inspection apparatus, and the illumination light toward the surface of the subject in the YZ plane, as viewed from the direction denoted by the mark VI in FIG. 5.
FIG. 8 is a schematic diagram showing images I1, I2, ..., and In, which may be acquired every suitable time interval by the optical inspection apparatus shown in FIGS. 5 and 6.
FIG. 9 shows a single surface composition image of the subject constructed based on the images shown in FIG. 8.
FIG. 10 is a flowchart for constructing a single surface composition image of the subject using the optical inspection system according to the first arrangement.
FIG. 11 is a schematic diagram showing an arrangement of images I1, 12, ..., and In, which may be acquired every suitable time interval by suitably shifting them in the flowchart shown in FIG. 10.
FIG. 12 shows a plurality of images acquired by photographing, using the optical inspection system according to the first arrangement, the surface of the subject obtained by actually scratching the surface of a plastic flat plate, and arranged in order of acquisition time.
FIG. 13 shows a single surface composition image of the subject constructed based on the images shown in FIG. 12.
FIG. 14 is a flowchart corresponding to the flowchart shown in FIG. 10 to which a step of composing a defect identification image is added.
FIG. 15 is a defect identification image of a single subject composed based on the images shown in FIG. 13.
FIG. 16 is a schematic diagram showing an example in which a surface of a subject is a flat surface that is inclined relative to the XY plane in the optical inspection apparatus shown in FIG. 5.
FIG. 17 is a schematic diagram showing images 11, I2, ..., and In, which may be acquired every suitable time interval by the optical inspection apparatus shown in FIGS. 16 and 6.
FIG. 18 shows a single surface composition image of the subject constructed based on the images shown in FIG. 17.
FIG. 19 is a schematic diagram showing an example in which the surface of the subject includes, in a continuous manner, a flat surface parallel to the XY plane and an inclined flat surface inclined relative to the XY plane in the optical inspection apparatus shown in FIG. 5.
FIG. 20 is a schematic diagram showing images I1, I2, ..., and In, which may be acquired every suitable time interval by the optical inspection apparatus shown in FIGS. 19 and 6.
FIG. 21 shows a single surface composition image of the subject constructed based on the images shown in FIG. 20.
FIG. 22 is a flowchart for constructing a single surface composition image of the subject using the optical inspection system according to a modification of the first arrangement.

FIG. 23 is a schematic diagram showing an optical inspection system according to a second arrangement.

FIG. 24 is a schematic diagram showing the optical inspection apparatus shown in FIG. 23 and a relationship between a surface of a subject and reflection light in the optical inspection apparatus.

FIG. 25 shows an arrangement of images acquired by photographing the surface of the subject, which has been obtained by actually scratching a surface of a plastic flat plate, at a suitable frame rate using the optical inspection system according to the second arrangement.

FIG. 26 shows a single surface composition image of the subject constructed based on the images shown in FIG. 25.

FIG. 27 is a defect identification image of a single subject composed based on the images shown in FIG. 26.

FIG. 28 is a schematic diagram showing an example of composing a single defect identification image of a subject without composing a single surface composition image of the subject, using an optical inspection system according to a modification of the second arrangement.

FIG. 29 is a flowchart of a processing apparatus for composing a single defect identification image of the subject shown in FIG. 28.

FIG. 30 is a schematic diagram showing an optical inspection system according to a third arrangement.

FIG. 31 is a schematic diagram of the optical inspection apparatus of the optical inspection system shown in FIG. 30.

FIG. 32 is a flowchart of a processing apparatus for estimating an inclination angle of the surface of the subject based on images acquired by the optical inspection system shown in FIG. 30.

## DETAILED DESCRIPTION

Hereinafter, arrangements will be described with reference to the drawings. The drawings are schematic or conceptual, and the relationship between the thickness and the width of each component, the ratio in dimensions between the components, and the like are not necessarily the same as the actual ones. The same component may be depicted in different dimensions and/or ratios in different drawings. In the following description and the drawings, elements having the same function and configuration will be denoted by the same reference numerals, and redundant descriptions will be omitted.

It is an object of one example to provide a processing apparatus configured to perform processing to grasp a state of a subject surface in various shapes or used for subject surface defect identification image composition, an optical inspection system including the processing apparatus, a subject surface image composition method, a defect identification image composition method, a subject surface image composition program, a subject surface angle estimation method, and a subject surface inclination angle estimation program.

According to the arrangement, a processing apparatus includes one or more processors. The one or more processors are configured to: shift one or more captured images selected from a plurality of captured images including a reference captured image, and compose at least one subject surface image by superimposing the shifted one or more captured images on the reference captured image. The plurality of captured images have been obtained with an imaging portion within a predetermined time while a surface of a subject moving relative to the illumination light is irradiated with a plurality of beams of illumination light traveling in different directions in at least one plane.

In the following description, it is assumed that "light" is a kind of electromagnetic wave, and includes, for example, X-rays, ultraviolet rays, visible light, infrared light, and microwaves. In the arrangements to be described below, it is assumed that "light" is visible light with a wavelength in the range from 400 nm to 750 nm.

(First Arrangement)

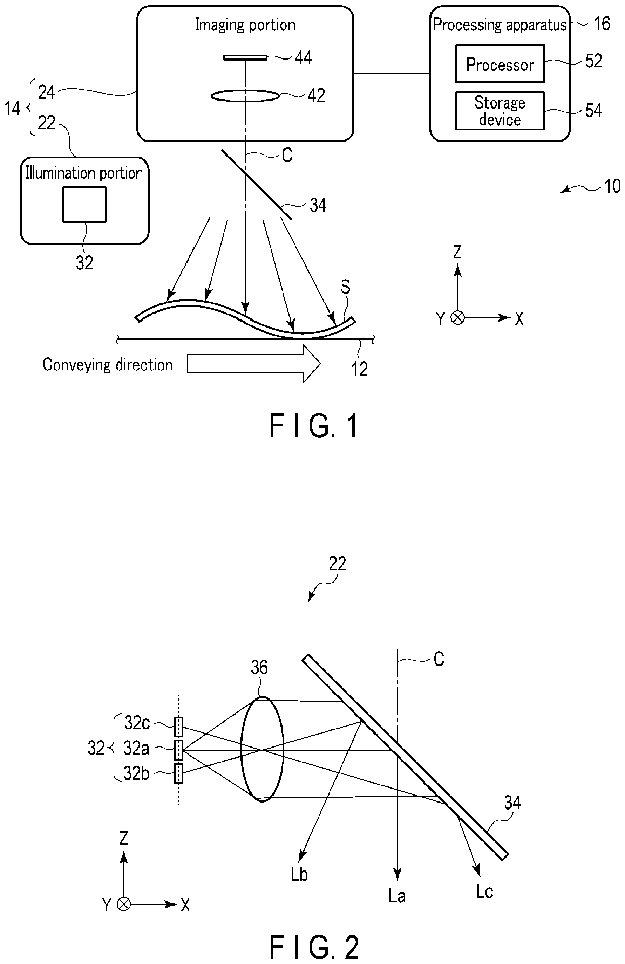

FIG. 1 shows an optical inspection system 10 according to the present arrangement. As shown in FIG. 1, the optical inspection system 10 includes a conveyor portion 12 configured to convey a subject (sample) S; an optical inspection apparatus 14 configured to optically acquire an image of the subject S to be conveyed, and a processing apparatus 16 connected to the optical inspection apparatus 14 in either a wired manner or a wireless manner.

An XYZ orthogonal coordinate system shown in FIG. 1 is defined in the conveyor portion 12 and the optical inspection apparatus 14. It is assumed that an X axis is a direction in which the subject S is moved by the conveyor portion 12. It is assumed herein that the right side as depicted in FIG. 1 is a +X direction. An Y axis is orthogonal to the X axis, and defines, together with the X axis, a plane parallel to a floor surface. It is assumed herein that the backward direction as depicted in FIG. 1 is a +Y direction. It is assumed that a Z axis is orthogonal to the X and Y axes, and that the upward direction, for example, is a +Z direction.

The conveyor portion 12 has a suitable width along the Y-axis direction, and is configured to convey the subject S in a direction such as the +X direction. It is preferable that the conveyor portion 12 move the subject S in the +X direction at a predetermined conveying speed. It is also preferable that a height of the subject S not change, at a constant coordinate on the Z axis, at a position of the conveyor portion 12 at which an inspection is performed by the optical inspection apparatus 14. The conveyor portion 12 is controlled by the processing apparatus 16, to be described later.

The term "conveying" refers to movement of the subject S relative to the optical inspection apparatus 14 configured to irradiate the subject S with irradiation light and acquire a plurality of images of the subject S. For example, the subject S may be moved relative to the optical inspection apparatus 14 in a stationary state, the optical inspection apparatus 14 may be moved relative to the subject S in a stationary state, or both of them may be moved. That is, any configuration may be adopted as long as the subject S is moved relative to the optical inspection apparatus 14. The conveyor portion 12 may be used to convey the subject S, or may be used to convey the optical inspection apparatus 14.

Moreover, the movement of the subject S relative to the optical inspection apparatus 14 may be either continuous or intermittent. For example, both of the optical inspection apparatus 14 and the subject S may be in a stationary state at the moment when the optical inspection apparatus 14 acquires an image, or both of the optical inspection apparatus 14 and the subject S may be moving relative to each other at the moment when an image is acquired. That is, the optical inspection apparatus 14 may move in any manner as long as the subject S that moves relative thereto can be photographed.

In the present arrangement, it is assumed, for example, that the subject S is moved at a predetermined speed by the conveyor portion 12 relative to the optical inspection apparatus 14 in a stationary state, and that a surface of the subject S that has come into the field of view of the optical inspection apparatus 14 is imaged multiple times by an imaging portion 24, to be described later, of the optical inspection apparatus 14.

The optical inspection apparatus 14 includes an illumination portion 22 configured to illuminate the subject S with illumination light, and an imaging portion (camera) 24. The illumination portion 22 and the imaging portion 24 of the optical inspection apparatus 14 are controlled by the processing apparatus 16, as will be described later.

The illumination portion 22 includes a light source 32. The light source 32 illuminates the surface of the subject S with light diverging from the optical axis of the imaging portion 24. Such illumination light may be generated by using either a lens or a reflector. It suffices that light is incident on the surface of the subject S at an incident angle that varies according to the position of the subject S in the field of view provided by the imaging portion 24 during a certain period of time.

FIG. 2 shows a schematic diagram of an illumination portion 22 taken along a ZX plane. As shown in FIG. 2, the light source 32 includes, for example, light-emitting diodes (LEDs) 32a, 32b, and 32c aligned along the Z axis, and emits, for example, white light in the +X direction in the present arrangement. The number of the LEDs (32a, 32b, and 32c) is not limited to three, and may be suitably set. The light source 32 is not limited to the LEDs 32a, 32b, and 32c, and may be an incandescent light bulb, a fluorescent tube, a mercury-vapor lamp, or the like. The color of light emitted by the light source 32 is not limited to white. The light source 32 may be arranged either on the optical axis C of the imaging portion 24 or not on the optical axis C. If the light source 32 is not arranged on the optical axis of the imaging portion 24, a beam splitter 34 such as a half mirror (semi-transparent mirror) may be used to allow the subject to be illuminated with light emitted from the light source 32 via the beam splitter 34. The beam splitter 34 may be either a polarizing beam splitter, or a non-polarizing beam splitter.

It is assumed, in the present arrangement, that the illumination portion 22 includes a light source 32, a half mirror 34, and an illumination lens 36, and that light from the light source 32 passes through the illumination lens 36, is reflected from the half mirror 34, and travels toward the surface of the subject S.

Note that the illumination lens 36 is arranged between the light source 32 and the half mirror 34. As the illumination lens 36, a cylindrical lens, a freeform surface lens, a Fresnel lens, a concave mirror, or the like may be used. The illumination lens 36 allows light from each of the light sources 32a, 32b, and 32c to be collimated in the ZX plane. The collimated illumination light La from the light source 32a travels toward the -Z direction along the optical axis C of the imaging portion 24 in the ZX plane. The collimated illumination light Lb from the light source 32b travels toward a different direction at a different position than the illumination light La in the ZX plane. The collimated illumination light Lc from the light source 32c travels toward a different direction at a different position than the illumination light La and Lb in the ZX plane.

In this manner, the illumination portion 22 irradiates the surface of the subject S with illumination light traveling toward different directions in at least one plane (ZX plane). It is to be noted that the LEDs 32a, 32b, and 32c of the light source 32 may be turned on at the same time. The illumination portion 22 may be configured in such a manner that the light source 32 configured to emit illumination light that can be considered to be substantially collimated is arranged on the optical axis C, and the surface of the subject S is irradiated therewith.

As shown in FIG. 1, the imaging portion 24 includes, for example, an image forming optical element 42 and an image sensor 44.

The image forming optical element 42 may be configured of either a single lens or multiple lenses, and may be, as necessary, a combination of a lens and a mirror. The image forming optical element 42 may have any configuration capable of forming an image of light.

The image sensor 44 acquires a plurality of images I1, I2, ..., and In (where n is an integer equal to or greater than 2) formed by the image forming optical element 42 at a suitable frame rate. The image sensor 44 is configured to disperse and obtain light into RGB in each pixel. The image sensor 44 includes, for example, $n_m+1$ (where $n_m$ is a natural number) pixels in the X-axis direction, and $m_m+1$ (where $m_m$ is a natural number) pixels in the Y-axis direction. The image sensor 44 operates to acquire a suitable image in the field of view at a suitable frame rate controlled by the processing apparatus 16.

Note that the frame rate may be adjusted by, for example, a conveying speed of the subject S by the conveyor portion 12.

It is assumed that each pixel is configured to receive light beams of at least two different wavelengths, namely, a light beam of a first wavelength and a light beam of a second wavelength. It is assumed that a plane including a region in which the image sensor 44 is arranged is an image surface of the image forming optical element 42. The image sensor 44 may be either an area sensor or a line sensor. An area sensor is a sensor in which pixels are planarly arrayed in the same plane. A line sensor is a sensor in which pixels are linearly arrayed. Each of the pixels may include three color channels: R, G, and B. It is assumed, in the present arrangement, that the image sensor 44 is an area sensor, and that each pixel includes three color channels: red, blue, and green.

The processing apparatus 16 includes one or more processors 52 configured to hold images captured by the imaging portion 24 and perform image processing on the images, to be described later, and a storage device 54 as a non-transitory storage medium configured to store images.

The processor 52 is, for example, a CPU or a GPU, but may be any element configured to perform image processing, to be described later. The processor 52 corresponds to the central nerve of a computer that performs processing such as computation and control required for the processing of the processing apparatus 16, and controls the entirety of the processing apparatus 16 in an integrated manner. The processor 52 executes control to realize various functions of the processing apparatus 16 based on a program such as firmware, application software, or system software stored in the storage device 54 such as an auxiliary storage device or a ROM. The processor 52 includes, for example, a central processing unit (CPU), a micro-processing unit (MPU), a digital signal processor (DSP), an application-specific integrated circuit (ASIC), a field-programmable gate array (FPGA), a graphics processing unit (GPU), or the like. Alternatively, the processor 52 may be a combination of two or more of them. In the processing apparatus 16, only a single processor 52 may be provided, or more than one processor 52 may be provided.

The processing apparatus 16 executes a process of causing various functions to be exhibited by causing the processor 52 to execute programs, etc. stored in the storage device 54. It is also preferable that a control program of the processing apparatus 16 be stored on a suitable server or cloud, instead of being stored in the storage device 54 of the processing apparatus 16. In such a case, the control program is executed through, for example, communication with the processor 52 included in the optical inspection system 10 via a communication interface. That is, the processing apparatus 16 according to the present arrangement may be included in the optical inspection system 10, and may be placed on a server or a cloud of a system of an inspection field of various types distanced from the optical inspection system 10. Thus, it is also preferable that an optical inspection program provided on a server or a cloud be executed through communication with the processor 52 included in the optical inspection system 10 via a communication interface, instead of such a program being stored in the storage device 54. Accordingly, the processor 52 (processing apparatus 16) may execute an optical inspection program (optical inspection algorithm), to be described later.

The processor 52 (processing apparatus 16) may control, for example, the timing of emitting light from the light source 32 of the illumination portion 22, the timing of acquiring image data at the image sensor 44, and acquisition of image data from the image sensor 44, and perform, for example, superimposition of multiple images by one or more of the four arithmetic operations, etc. and suitable image processing on an image.

The storage device 54 is, for example, an HDD or an SSD, but may be any device configured to store one or more images.

Hereinafter, an operation of the optical inspection system 10 according to the first arrangement will be described.

It is assumed that a subject S is moving at a predetermined speed in a direction vertical to the optical axis of the imaging portion 24, and the optical inspection system 10 acquires a plurality of images of the moving subject S. Also, it is assumed that the subject S is a flat surface, a curved surface, or a combination of them.

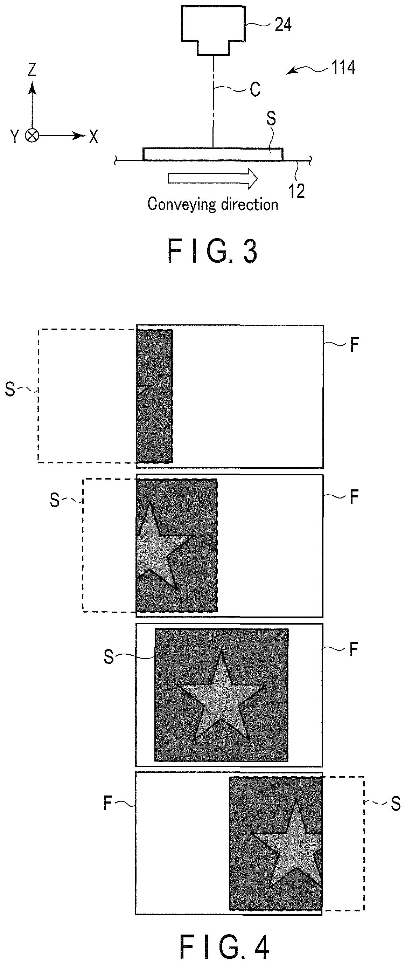

FIG. 3 is a schematic diagram showing an example in which a surface of a subject S being conveyed on the conveyor portion 12 in the +X direction is imaged by the imaging portion 24 using an optical inspection apparatus 114 according to a comparative example, which uses illumination light different from that of the optical inspection apparatus 14 of the optical inspection system 10 according to the present arrangement. The optical inspection apparatus 114 according to the comparative example illuminates the surface of the subject S using diffusion light, which is normal illumination light, and acquires an image with the imaging portion 24, regardless of, for example, the ZX plane and the YZ plane.

FIG. 4 shows an arrangement of images acquired by photographing the surface of the subject S at a suitable frame rate using the optical inspection apparatus 114 shown in FIG. 3. Upper images were photographed earlier in time than lower images. The dashed lines in FIG. 4 show virtual outlines of the subject S relative to a field of view F of the imaging portion 24.

For convenience in explanation, it is assumed herein that the subject S shown in FIG. 3 is formed as a flat plate in a rectangular shape, with a star drawn on the surface of the subject S. It is assumed that the surface (an upper surface depicted in FIG. 3) of the subject S is, for example, a glossy surface.

As shown in FIG. 4, the optical inspection apparatus 114 may acquire the entire image of the surface of the subject S in the field of view F of the imaging portion 24 according to the conveyance position of the conveyor portion 12. In an image that may be acquired by the optical inspection apparatus 114, the entirety of the field of view F is captured.

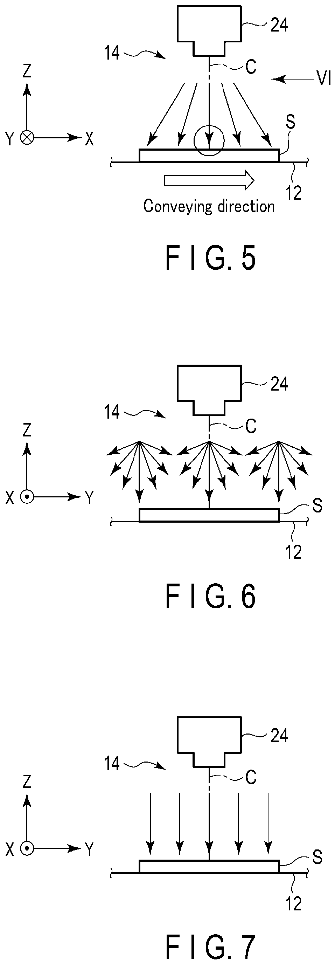

FIG. 5 is a schematic diagram showing a subject S in the shape of a flat plate being conveyed by the conveyor portion 12 of the optical inspection system 10 shown in FIG. 1, the optical inspection apparatus 14 configured to optically acquire an image of the subject S, and illumination light in the ZX plane. In FIG. 5, illustration of the illumination portion 22 is omitted. It is assumed herein that the subject S is the same as that in FIG. 4 photographed by the optical inspection apparatus 114 shown in FIG. 3.

FIG. 6 is a schematic diagram showing the subject S, the optical inspection apparatus 14, and illumination light in the YZ plane, as viewed from a direction denoted by the mark VI in FIG. 5. FIG. 7 is a schematic diagram different from FIG. 6, showing the subject S, the optical inspection apparatus 14, and illumination light in the YZ plane, as viewed from the direction denoted by the mark VI in FIG. 5. In FIGS. 6 and 7, illustration of the illumination portion 22 is omitted.

Examples of the illumination light in the YZ plane include diffusion light, as shown in FIG. 6. Other examples of the illumination light in the YZ plane include light parallel to the Z axis, as shown in FIG. 7. In the description of the present arrangement, it is assumed that the illumination light in the YZ plane is the diffusion light shown in FIG. 6.

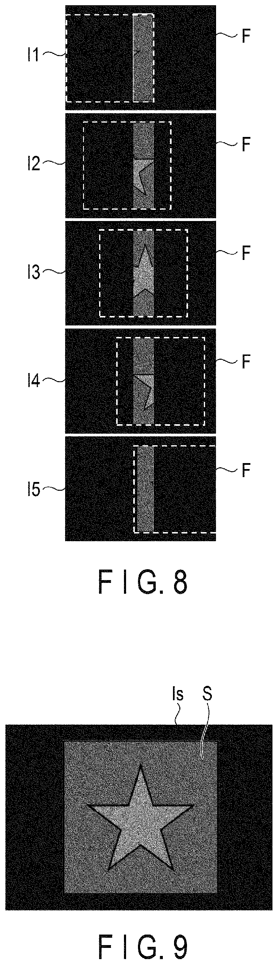

FIG. 8 is a schematic diagram showing images I1, I2, ..., and In, which may be acquired every suitable time interval by the optical inspection apparatus 14 according to the present arrangement shown in FIGS. 5 and 6. Note that the dashed lines in FIG. 8 are virtual lines added to show the position and the size of the subject S relative to the field of view F, and are not actually formed in the images.

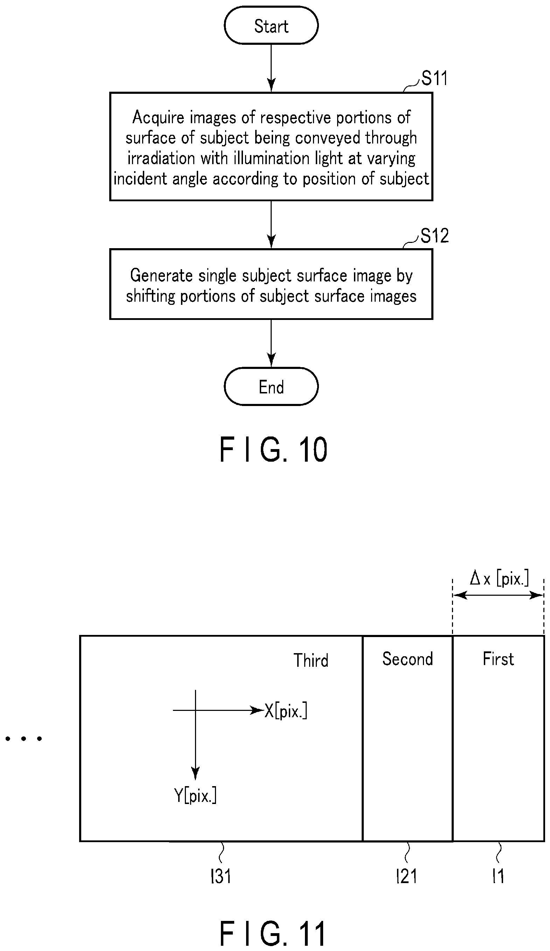

Upper images in FIG. 8 were photographed earlier in time than lower images. For convenience, the five images in FIG. 8 will be referred to as "I1" "I2", "I3", "I4", and "I5", even though they are not necessarily the first to fifth images that the processing apparatus 16 has caused the image sensor 44 of the imaging portion 24 to capture in a flow (see FIG. 10) to be described later. For example, one or more additional images may be captured between the images I1 and I2. That is, in FIG. 8 in which the five images I1, I2, I3, I4, and I5 are aligned, one or more images may be acquired at different timings between, for example, the uppermost image I1 and the second top image I2. Similarly, one or more images may be acquired at different timings between the images I2 and I3, between the images I3 and I4, and between the images I4 and I5. It is preferable that such unillustrated images be suitably stored in the storage device 54. For convenience of explanation, it is assumed, in the present arrangement, that the image I1 is a reference captured image. The reference captured image may be selected from, for example, one of the images I2, I3, I4, and I5.

FIG. 9 shows a single surface composition image Is of the subject S constructed based on the images shown in FIG. 8. The lateral length of the surface composition image Is in FIG. 9 may be suitably set according to the length of the subject S along the X-axis direction.

FIG. 10 is a flowchart of processing performed by one or more processors 52 of the processing apparatus 16 of the optical inspection system 10 according to the present arrangement.

It is assumed that the subject S used in inspection of the optical inspection apparatus 14 according to the present arrangement is completely the same as the one photographed by the optical inspection apparatus 114 shown in FIG. 3. It is also assumed that the speed of the subject S being conveyed by the conveyor portion 12 and the setting of the imaging portion 24 regarding the subject S are the same. The optical inspection apparatus 14 according to the present arrangement differs from the optical inspection apparatus 114 for normal photography in terms of illumination of the surface of the subject S.

As shown in FIG. 10, the processing apparatus 16 (one or more processors 52) acquires a plurality of images I1, I2, ..., and In of respective portions of the surface of the subject S being conveyed by the conveyor portion 12 obtained by irradiating, by the illumination portion 22 of the optical inspection apparatus 14, the surface of the subject S with illumination light at an incident angle that varies according to the position of the subject S, while causing the conveyor portion 12 to convey the subject S (step S11).

Of the beams of light incident on the surface of the subject S from the illumination portion 22 of the optical inspection apparatus 14 according to the present arrangement along the ZX plane as shown in FIGS. 1, 2, 5, and 6, a beam of light incident on the surface of the subject S along the optical axis of the imaging portion 24 is approximately regularly reflected from the surface of the subject S, which is a flat surface (parallel to the XY plane), and is made incident on the image sensor 44 through the half mirror 34 and the image forming optical element 42. On the other hand, of the beams of light incident on the surface of the subject S from the illumination portion 22 of the optical inspection apparatus 14, if a beam of light deviated from the optical axis of the imaging portion 24 is made incident on the surface of the subject S, such a beam of light is less likely to be made incident on the image forming optical element 42 of the imaging portion 24 by the law of reflection. If such a beam of light deviated from the optical axis of the imaging portion 24 is made incident on the surface of the subject S, part of the reflection light from the surface of the subject S is not reflected toward the image forming optical element 42 of the imaging portion 24, and is deviated from the field of view F of the image forming optical element 42 and the image sensor 44. It is thus possible, with the imaging portion 24 of the optical inspection apparatus 14 shown in FIGS. 1, 2, 5, and 6, to obtain an image of the surface of the subject S on the optical axis C of the imaging portion 24 and the vicinity of the optical axis C in the X-axis direction; however, it is difficult to obtain an image of a portion of the surface of the subject S deviated from the optical axis C and the vicinity thereof in the X-axis direction. That is, the image of the surface of the subject S on the optical axis C of the imaging portion 24 and the vicinity of the optical axis C in the X-axis direction can be obtained as an image of the surface of the subject S; however, the portion of the surface of the subject S deviated from the optical axis C and the vicinity thereof in the X-axis direction appears black, for example, since light is not made incident on the imaging portion 24 from the portion deviated from the optical axis C and the vicinity thereof in the X-axis direction.

That is, of the beams of illumination light toward the surface of the subject S in the ZX plane of the optical inspection apparatus 14, a beam of light reflected toward the image forming optical element 42 of the imaging portion 24 is imaged by the imaging portion 24 as a regular reflection component according to the law of reflection.

On the other hand, of the beams of light incident on the surface of the subject S from the illumination portion 22 (not illustrated) of the optical inspection apparatus 14 along the YZ plane according to the present arrangement, as shown in FIG. 6, diffusion light incident on the surface of the subject S along the optical axis C of the imaging portion 24 is made incident on the image sensor 44 through the half mirror 34 and the image forming optical element 42. Also, the light incident on the surface of the subject S so as to be deviated from the optical axis C of the imaging portion 24 is diffusion light, and is thus made incident on the image sensor 44 through the half mirror 34 and the image forming optical element 42. Thus, in the example shown in FIG. 6, the imaging portion 24 obtains not only an image of the optical axis C of the imaging portion 24 and the vicinity thereof in the Y-axis direction, but also an image of a portion deviated from the optical axis C along the Y-axis direction.

Accordingly, if the subject S is a flat plate and the surface of the subject S is a flat plate, as shown in FIGS. 5 and 6, each of the images I1, I2, I3, I4, and I5 of the surface of the subject S that may be acquired by the optical inspection apparatus 14 according to the present arrangement is a part of the field of view of the image sensor 44 in the X-axis direction, as shown in FIG. 8. On the other hand, in the present arrangement, the image sensor 44 is configured to obtain an image of the entire field of view F of the image sensor 44 in the Y-axis direction in the corresponding X-axis range.

Herein, the processing apparatus 16 (one or more processors 52) is aware of the conveying direction and the conveying speed of the subject S being conveyed by the conveyor portion 12, as well as the position of the subject S on the conveyor portion 12. Also, the processor 52 is aware of an acquisition time and an acquisition time interval (frame rate) of each of the images I1, I2, ..., and In.

The processing apparatus 16 (one or more processors 52) sets a reference image I1, shifts images I2, I3, I4, and I5 that have been picked up according to the conveying speed of the conveyor portion 12 from the acquired images (which are not limited to the images I2, I3, I4, and I5 shown in FIG. 8 and may include images acquired between the images, but are assumed herein as images I2, I3, I4, and I5 for convenience) of the respective portions of the surface of the subject S by, for example, n×Δx (where n is a natural number), and composes at least one surface composition image Is of the subject S by superimposing the images I2, I3, I4, and I5 on the image I1 (step S12). At this time, each image is shifted by (n-1)×Δx in the -X direction by, for example, not shifting the first reference image I1, shifting the second image by 1×Δx in the -X direction, and shifting the third image by 2×Δx in the -X direction, thereby generating a single surface composition image Is (see FIG. 9) of the subject S.

Herein, when the processing apparatus 16 composes the surface composition image Is of the subject S, the processing apparatus 16 sets a shift amount of each of the captured images I2, I3, ..., and In based on the frame rate in the image sensor 44 of the imaging portion 24, the conveying speed of the subject S relative to the imaging portion 24, and the number of pixels of the image sensor 44 in a direction along the conveying direction of the subject S relative to the image sensor 44 of the imaging portion 24.

In this manner, the processing apparatus 16 according to the present arrangement rearranges the images I1, I2, I3, ..., captured by the imaging portion 24 as shown in FIG. 11, and performs processing as will be detailed later, thereby generating a new single surface composition image Is of the subject S (see FIG. 9) based on the positional relationship of the subject S.

An image I21 is created by shifting an image extraction portion of the image I2 by Δx from the image I1 in the -X-axis direction, based on the conveying direction and the conveying speed of the subject S being conveyed by the conveyor portion 12, as well as a relationship between the position and the acquisition time of each of the images I1, I2, ..., and In. Similarly, an image I31 is created by shifting an image extraction portion of the image I3 by Δx from the image I2 in the -X-axis direction. That is, an image extraction portion of the image I3 is shifted by 2×Δx from the image I1 in the -X-axis direction. In this manner, each of the images I2, I3, ..., and In is sequentially shifted by Δx from the previous image in the -X-axis direction. That is, the processing apparatus 16 creates images I21, I31, ..., and In1.

Thereafter, the processing apparatus 16 superimposes the images I21, I31, ..., and In1 created by the above-described image processing on the image I1. This allows the processing apparatus 16 to create an image (composition image) Is relating to the surface of the subject S.

A partial overlap may occur between the images, for example, between the images I1 and I2. In this case, the processing apparatus 16 subtracts one of the overlapping portions, or averages the pixels values of the overlapping portions. Thus, when the processing apparatus 16 composes the surface composition image Is of the subject S, the processing apparatus 16 superimposes the captured images I2, ..., and In on the reference captured image I1, based on a suitable one or more of the four arithmetic operations.

Assuming that the conveying direction of the subject S is the X-axis direction, half of the field of view F of the imaging portion 24 is $x_0$, the number of pixels of the image sensor 44 in the conveying direction is $n_m+1$, the frame rate of the image sensor 44 is $f_c$, and the conveying speed of the subject S is v, the processing apparatus 16 may superimpose the N+1-th acquired image (where N is a natural number) shifted in the -X direction by $\Delta x$ on the previous, N-th acquired image. The shift amount $\Delta x$ of each of the acquired images is obtained by $\Delta x = (v \cdot n_m)/ (2x_0 \cdot f_c)$.

It is assumed, as an example, that $x_0 = 50$ mm, $n_m = 1000$ pix, $v = 100$ m/s, and $f_c = 50$ fps. In this case, $\Delta x = 20$ pix. Accordingly, the processing apparatus 16 superimposes the images I2, I3, ..., and In on the image I1 after shifting the images I2, I3, ..., and In from the reference image I1 by $\Delta x = 20\text{pix}\times(n-1)$ in the -X direction, and can obtain a surface composition image Is (see FIG. 9) of the subject S. Such an image Is is obtained not by diffusion light but by regularly reflected beams of illumination light that can be considered to be substantially collimated in the ZX plane.

The surface composition image Is of the subject S according to the present arrangement (see FIG. 9) is obtained by illumination light from a limited range of directions in the ZX plane. Accordingly, the optical inspection system 10 according to the present arrangement can acquire the surface composition image Is of the subject S that is not susceptible to light other than light that directly faces the surface of the subject S. The positional relationship between the subject S being conveyed and the optical inspection apparatus 14 changes momentarily. Thus, the positional relationship between the light that directly faces the surface of the subject and the optical inspection apparatus 14 changes momentarily. Accordingly, an image In of the subject S at a certain point in time and an image In+1 of the subject S at another point in time differ. The processing apparatus 16 is configured to acquire, for example, an entire image Is of the surface of the subject S by setting $\Delta x$ for the image of the subject in relation to $x_0$, $n_m$, $v$, and $f_c$ and by performing image processing of the images In, In+1.

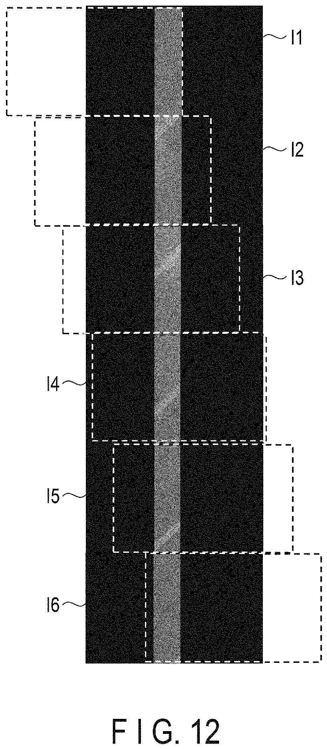

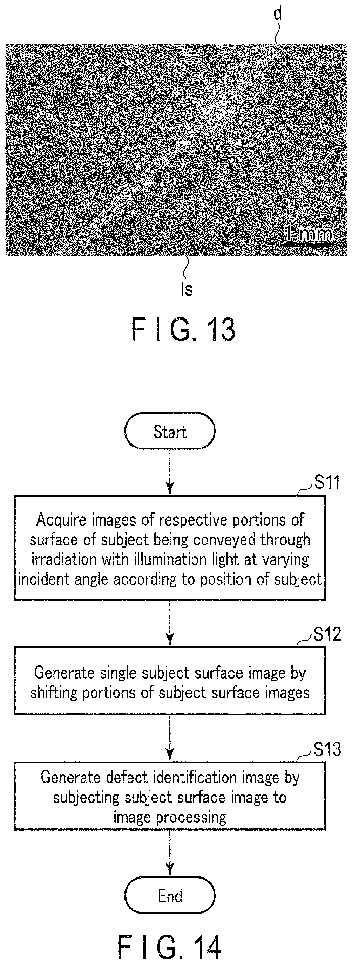

FIG. 12 shows an arrangement of images I1, I2, ..., and I6 acquired by photographing the surface of the subject S, which has been obtained by actually scratching a surface of a plastic flat plate, at a suitable frame rate using the optical inspection system 10 according to the present arrangement. Upper images were photographed earlier in time than lower images. FIG. 13 shows a single surface composition image Is of the subject S, which has been composed based on the images shown in FIG. 12. As shown in FIG. 13, with the optical inspection system 10 according to the present arrangement, it is possible to obtain an image equivalent to the actual image of the surface of the subject S (a surface composition image Is of the subject S) .

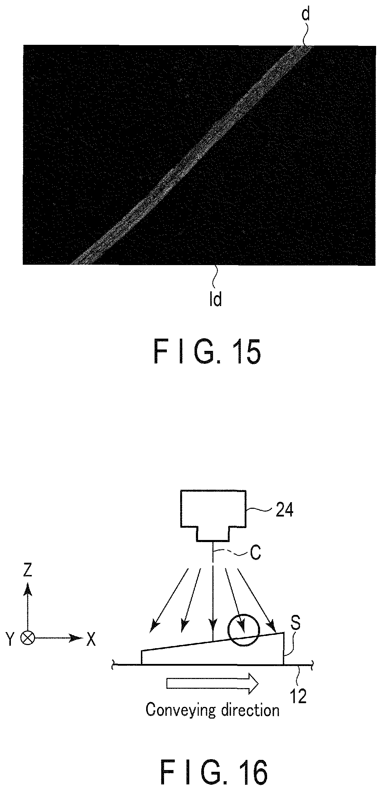

As shown in FIG. 14, the processing apparatus 16 is configured to perform image processing (step S13) on the surface composition image Is of the subject S shown in FIG. 13. The processor 52 of the processing apparatus 16 performs the image processing for identifying a defect in the surface composition image Is of the subject S by performing arithmetic processing with convolutional image filtering on the surface composition image Is of the subject S. It is assumed herein that a Difference of Gaussians (DoG) is used as an example of the image processing. As can be seen from FIGS. 13 and 15, a defect identification image Id, in which only a scratch d has been sharpened, can be obtained from the surface composition image Is of the subject S. Through such image processing, the processing apparatus 16 is configured to extract a defect shown in the surface composition image Is of the subject S. The number of defect identification images Id that can be obtained by the processing apparatus 16 is not limited to one, and may be two or more.

Examples of the image processing performed by the processing apparatus 16 include linear detection, edge detection, frequency filtering, Canny filtering, Laplacian filtering, Gaussian filtering, DoG processing, etc. The processing apparatus 16 can adopt any image processing configured to extract a defect in the surface of the subject S.

According to the present arrangement, it is thus possible to provide a processing apparatus 16, an optical inspection system 10 including the processing apparatus 16, a method of composing a surface composition image Is of a subject S, and a program for composing the surface composition image Is of the subject S for performing processing to grasp a state of the surface of the subject S in various shapes.

A method of composing a surface composition image Is of a subject S, or a subject surface image composition method according to the present arrangement includes: irradiating, with a plurality of beams of illumination light traveling in different directions in at least one plane, a surface of the subject S moving relative to the illumination light; obtaining, within a predetermined time, a plurality of captured images I1, I2, I3, I4, and I5 including a reference captured image I1 by imaging the surface of the subject S with an imaging portion 24; shifting one or more captured images I2, I3, I4, and I5 selected from the plurality of captured images I1, I2, I3, I4, and I5; and composing at least one surface composition image Is of the subject S by superimposing the shifted one or more captured images I2, I3, I4, and I5 on the reference captured image I1.

A program for composing a surface composition image Is of a subject S or a subject surface image composition program according to the present arrangement is configured to cause one or more processors 52 to execute: shifting one or more captured images I2, I3, I4, and I5 selected from a plurality of captured images I1, I2, I3, I4, and I5 including a reference captured image I1; and composing at least one surface composition image Is of the subject S by superimposing the shifted one or more captured images I2, I3, I4, and I5 on the reference captured image I1. The plurality of captured images I1, I2, I3, I4, and I5 have been obtained with an imaging portion 24 at different points in time while a surface of the subject S moving relative to the illumination light is irradiated with a plurality of beams of illumination light traveling in different directions in at least one plane.

A processing apparatus configured to compose subject surface image according to the present arrangement includes one or more processors 52 configured to: shift one or more captured images I2, I3, I4, and I5 selected from a plurality of captured images I1, I2, I3, I4, and I5 including a reference captured image I1; and compose at least one surface composition image Is of a subject S by superimposing the shifted one or more captured images I2, I3, I4, and I5 on the reference captured image I1. The plurality of captured images I1, I2, I3, I4, and I5 have been obtained with an imaging portion 24 at different points in time while a surface of the subject S moving relative to the illumination light is irradiated with a plurality of beams of illumination light traveling in different directions in at least one plane.

The optical inspection system 10 according to the present arrangement includes: an illumination portion 22 configured to irradiate a surface of the subject S with beams of illumination light traveling in different directions; an imaging portion 24 (image sensor 44) configured to image the surface of the subject S at a predetermined frame rate; and a conveyor portion 12 configured to move the surface of the subject S in a predetermined direction relative to the illumination portion 22 and the imaging portion 24; and a processing apparatus 16 including one or more processors 52. The one or more processors 52 of the processing apparatus 16 are used as described above.

According to the present arrangement, it is possible to provide a processing apparatus 16, an optical inspection system 10 including the processing apparatus 16, a method of composing a surface composition image Is of the subject S, and a program for composing the surface composition image Is of the subject S, for performing processing to grasp a state of a surface of a subject S in various shapes.

According to the present arrangement, when the processor 52 composes at least one surface composition image Is of a subject S, the one or more processors 52 are configured to set a shift amount of each of the one or more captured images I2, I3, ..., and In based on a frame rate of an imaging portion 24 (image sensor 44), a conveying speed of the subject S relative to the imaging portion 24, and a number of pixels of the imaging portion 24 (image sensor 44) in a direction along a conveying direction of the subject S relative to the imaging portion 24.

The one or more processors 52 are configured to set the shift amount ($\Delta x$) based on: $\Delta x = (v \cdot n_m)/(2x_0 \cdot f_c)$. It is assumed herein that $x_0$ denotes half of the field of view of the imaging portion 24 (image sensor 44) along the conveying direction of the subject S, $n_m+1$ denotes the number of pixels of the imaging portion 24 (image sensor 44) along the conveying direction of the subject S, $f_c$ denotes a frame rate of the imaging portion 24 (image sensor 44), and v denotes the conveying speed of the subject S relative to the imaging portion 24 (image sensor 44).

When the one or more processors 52 shifts the one or more captured images I2, I3, I4, and I5, and composes at least one surface composition image Is of the subject S by superimposing, on the reference captured image I1, the captured images I2, I3, I4, and I5, the one or more processors 52 configured to superimpose the shifted one or more captured images on the reference captured image based on, for example, one or more of the four arithmetic operations.

Various means may be adopted as a method for superimposing the images I1, I2, ..., and In by the processor 52. For example, the processor 52 may compare a plurality of pixel values of overlapping images I1, I2, ..., and In, and may adopt the largest pixel value as a pixel value in the configuration image Is. Alternatively, the processor 52 may adopt a mean value of a plurality of pixel values of overlapping images. When the processor 52 composes the surface composition image Is of the subject S with this method, the processor 52 can obtain a composition image Is in which the subject S is photographed at the correct position.

The one or more processors 52 are configured to: perform image processing for defect identification on at least one surface composition image Is of the subject S, and obtains a defect extraction image Id obtained by extracting a defect in the surface composition image Is of the subject S.

When the one or more processors 52 perform image processing for defect identification, the one or more processors 52 are configured to perform arithmetic processing with convolutional image filtering on at least one surface composition image Is of the subject S.

Next, an example in which the entire surface of the subject S is inclined relative to the XY flat surface will be described with reference to FIGS. 16 to 18.

FIG. 16 shows an example in which the surface of the subject S is an inclined flat surface relative to the XY plane in the optical inspection apparatus 14 shown in FIG. 5. In FIG. 16, illustration of the illumination portion 22 is omitted. In the example shown in FIG. 16, the surface of the subject S is formed as an inclination surface that becomes higher in the +Z direction as it moves toward the +X direction. It is assumed that a beam of illumination light traveling along the YZ plane relative to the surface of the subject S is diffusion light, as shown in FIG. 6.

In the example shown in FIG. 16, a beam of illumination light traveling along the optical axis C of the imaging portion 24 in the ZX plane is less likely to be made incident on the image forming optical element 42 of the imaging portion 24 by the law of reflection. On the other hand, of the beams of illumination light traveling toward the subject S in the ZX plane, a beam reflected toward the image forming optical element 42 of the imaging portion 24 based on the law of reflection is made incident on the image forming optical element 42 of the imaging portion 24 as a regular reflection component, and is imaged by the image sensor 44.

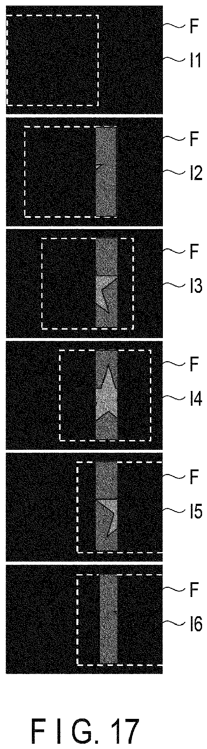

FIG. 17 shows an example of images I1, I2, ..., and I6, which may be acquired by the optical inspection apparatus 14 shown in FIGS. 16 and 6. Upper images were photographed earlier in time than lower images. Note that the dashed lines in FIG. 17 are added to show the position and the size of the subject S relative to the field of view F, and are not actually formed in the images.

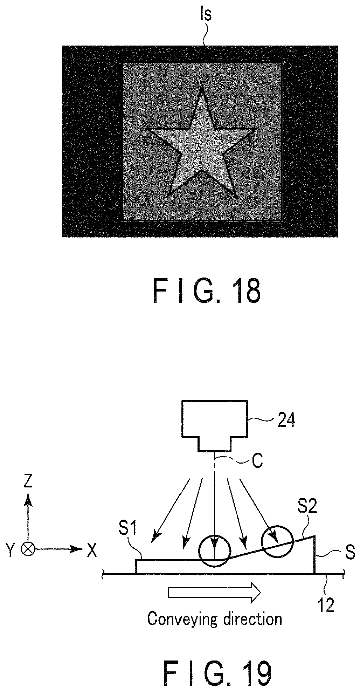

FIG. 18 shows a surface composition image Is of a single subject S composed based on the above-described flow (see FIG. 10). Even in the case where the surface of the subject S is an inclination surface, it is possible to obtain a surface composition image Is of the subject S, similarly to the above-described case. Even if the surface of the subject S, which has been obtained by actually scratching a surface of a plastic flat plate, is an inclination surface, it is possible to obtain a surface configuration image Is of the subject S, as shown in FIGS. 12 and 14. The processing apparatus 16 is configured to perform image processing on the surface composition image Is of the subject S. Through such image processing, the processing apparatus 16 is configured to extract a defect shown in the surface composition image Is of the subject S (see FIG. 15).

According to the present arrangement, even if the surface of the subject S is an inclination surface as shown in FIG. 16, it is possible to provide a processing apparatus 16 for performing processing to grasp the state of the surface of the subject S in various shapes, the optical inspection system 10 including the processing apparatus 16, a method of composing a surface composition image Is of the subject S, and a program for composing the surface composition image Is of the subject S.

Next, an example in which the surface of the subject S is formed as a combination of a surface parallel to the XY plane and an inclination surface will be described with reference to FIGS. 19 to 21.

FIG. 19 shows an example in which the surface of the subject S is continuous with a flat surface S1 parallel to the XY plane and an inclination surface S2 inclined relative to the XY plane in the optical inspection apparatus 14 shown in FIG. 5. In FIG. 19, illustration of the illumination portion 22 is omitted. In the example shown in FIG. 19, the inclined flat surface S2 is formed as an inclination surface that becomes higher toward the +X direction. It is assumed that a beam of illumination light traveling along the YZ plane relative to the surface of the subject S is diffusion light, as shown in FIG. 6.

In the example shown in FIG. 19, a beam of illumination light traveling along the optical axis C of the imaging portion 24 in the ZX plane is made incident on the image forming optical element 42 of the imaging portion 24 by regular reflection according to the law of reflection. Of the beams of illumination light traveling toward the subject S in the ZX plane, a beam reflected toward the image forming optical element 42 of the imaging portion 24 based on the law of reflection is made incident on the image forming optical element 42 of the imaging portion 24 as a regular reflection component, and is imaged by the image sensor 44.

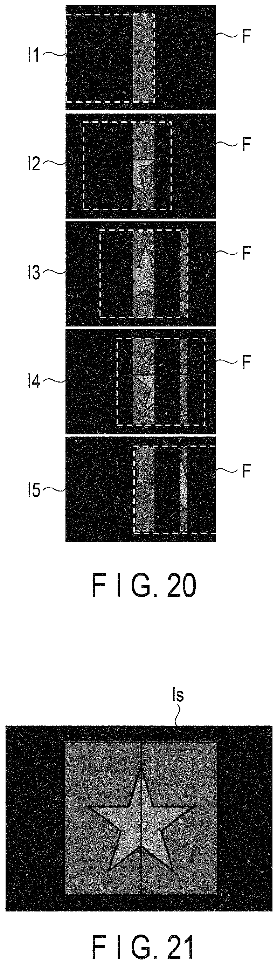

FIG. 20 shows an example of images I1, I2, I3, I4, and I5, which may be acquired by the optical inspection apparatus 14 shown in FIGS. 19 and 6. Upper images were photographed earlier in time than lower images. Note that the dashed lines in FIG. 20 are added to show the position and the size of the subject S relative to the field of view F, and are not actually formed in the images.

FIG. 21 shows a single surface composition image Is of the subject S composed based on the above-described flow (see FIG. 10). Even in the case where the surface of the subject S is a combination of a flat surface S1 and an inclined flat surface S2, it is possible to obtain a surface composition image Is of the subject S, similarly to the above-described case. Even if the surface of the subject S, which has been obtained by actually scratching a surface of a plastic flat plate, is an inclination surface, it is possible to obtain a surface composition image Is of the subject S, as shown in FIGS. 12 and 13. The processing apparatus 16 is configured to perform image processing on the surface composition image Is of the subject S. The processing apparatus 16 is configured to extract a defect shown in the surface composition image Is of the subject S through such image processing (see FIG. 14).

According to the present arrangement, even if a subject S includes a surface that is a combination of a flat surface S1 and an inclined flat surface S2 shown in FIG. 19, it is possible to provide a processing apparatus 16 for performing processing to grasp a state of a surface of the subject S in various shapes, an optical inspection system 10 including the processing apparatus 16, a method of composing a surface composition image Is of the subject S, and a program for composing the surface composition image Is of the subject S.

Even if the surface of the subject S is wavy in the ZX plane, as shown in FIG. 1, an actual image of the surface of the subject S is acquired as a combination of a flat surface and an inclination surface, as in the above-described example, and a single surface composition image Is of the subject S is composed. According to the present arrangement, it is possible to provide a processing apparatus 16 for performing processing to grasp a state of a surface of a subject S in various shapes, an optical inspection system 10 including the processing apparatus 16, a method of composing a surface composition image Is of the subject S, and a program for composing the surface composition image Is of the subject S.

(Modification)

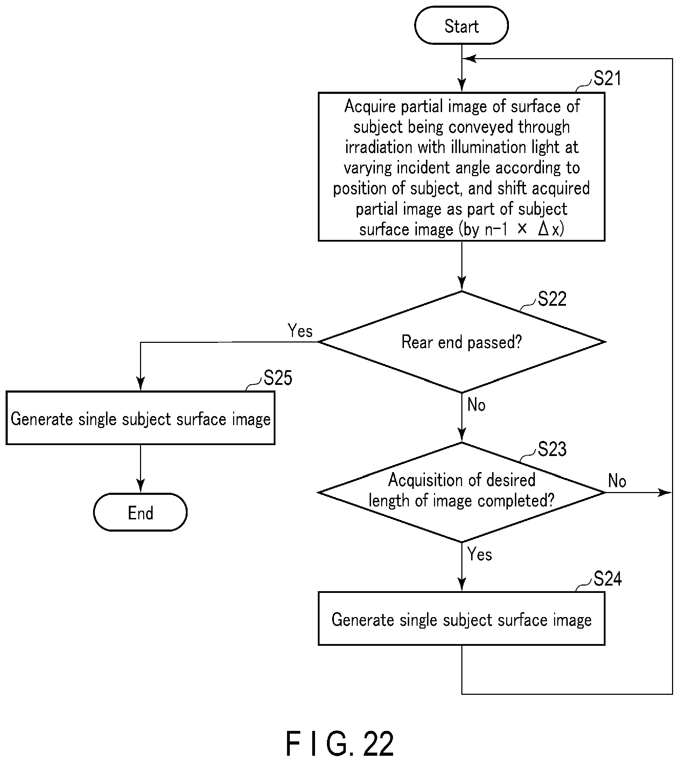

A subject S shown in FIGS. 5 to 21 is depicted in a size that falls within the field of view F in its entirety. An example has been described in which a surface composition image Is is formed using suitable captured images I1, I2, ..., and In after completing capturing of images of the subject S. The processing apparatus 16 may be configured, for example, to sequentially superimpose captured images before completing the capturing of the images of the subject S, thereby composing an image Is in a predetermined length. Since a sheet-like member fed from a roll, for example, may have a length of tens or hundreds of meters in the conveying direction, the subject S may not fall within the field of view F in its entirety. In such a case, the processing apparatus 16 may generate a surface composition image Is of the subject S in a predetermined length in such a manner that an inspection range of the surface of the subject S is partitioned into, for example, a plurality of sections of a predetermined length along the conveying direction, and may perform processing to grasp a state of the surface of the subject S based on a following flowchart shown in FIG. 22.

The processing according to the present arrangement is also applicable to a subject S whose entire length in the conveying direction of the subject S is short enough that, for example, a surface composition image of the subject S falls within the field of view F of the image sensor 44.

It is assumed that the conveyor portion 12 conveys the subject S in the +X direction at a predetermined speed.

The processing apparatus 16 acquires a partial image of the surface of the subject S by irradiating the surface of the subject S being conveyed with illumination light at an incident angle that varies according to the position, and sets the acquired partial image as a first surface composition image of the subject S (step S21).

Next, the processing apparatus 16 determines whether a rear end of the subject S has passed through the field of view F of the imaging portion 24 along the conveying direction (step S22). Such determination may be performed by the processing apparatus 16 detecting an output of a sensor arranged in the conveyor portion 12, or detecting an extraction status of an image of the imaging portion 24. Herein, the latter is adopted.

If the rear end of the subject S has not passed through the field of view F of the imaging portion 24 (step S22-No), the processing apparatus 16 determines whether or not a surface composition image Is of the subject S of a predetermined length or with a desired number of pixels along the conveying direction has been acquired (step S23). Herein, the predetermined length and the desired number of pixels along the conveying direction of the surface composition image Is of the subject S substantially refer to the length and the number of pixels, respectively, of a range along the X-axis direction from which light is made incident to the image sensor 44. That is, they refer to a desired length or a desired number of pixels along the X-axis direction assuming that a surface composition image Is of the subject S is formed. Accordingly, a portion of a length or pixels along the X-axis direction over which light is not made incident on the image sensor 44 and which has not been captured as an image is excluded.

The length of the subject S along the conveying direction can be calculated by, for example, setting a predetermined relationship between the number of pixels in the field of view F and dimensions of the subject S, and counting the number of times of acquisitions of images in a flow.

The processing apparatus 16 performs the processing at step S21 again if a predetermined length or a desired number of pixels has not been reached (step S23-No), acquires a partial image of the surface of the subject S, and sets the acquired partial image as a second surface composition image of the subject S. The second partial image of the surface of the subject S is superimposed on the first partial image of the surface of the subject S by shifting the second partial image of the surface of the subject S by $\Delta x$. It is preferable that the images partially overlap.

The processing apparatus 16 repeatedly performs the above-described operation and sets, if a subject surface composition image (sample surface composition image) Is of a desired length is obtained by superimposing an n-th image, for example, the image at that point in time as a surface composition image Is of the subject S (step S24), returns to the processing at step S21 again, and obtains a new first surface composition image or an (n+1)-th surface composition image of the subject S. It is preferable that the new first surface composition image or the (n+1)-th surface composition image of the subject S partially overlap a single surface composition image Is of the subject S.

If the rear end of the subject S has passed through the field of view F of the imaging portion 24 (step S22-Yes), the processing apparatus 16 superimposes the images acquired at step S21 and composes a surface composition image Is (step S25).

With the optical inspection system 10 according to the present modification, it is possible to obtain an image equivalent to the actual image of the surface of the subject S (a surface composition image Is of the subject S). At this time, one or more surface composition images Is of a suitable length may be obtained for the subject S (step S24). Also, a single surface composition image Is including a rear end of the subject S can be obtained (step S25) .

The processing apparatus 16 is configured to perform the above-described image processing (see FIGS. 13 and 15) on the surface composition image Is of the subject S (step S13). Through such image processing, the processing apparatus 16 is configured to extract a defect shown in the surface composition image Is of the subject S. Examples of the image processing performed by the processing apparatus 16 include linear detection, edge detection processing, frequency filtering, Canny filtering, Laplacian filtering, Gaussian filtering, DoG processing, etc. Any image processing configured to extract a defect in the surface of the subject S may be adopted.

According to the present modification, it is thus possible to provide a processing apparatus 16 for performing processing to grasp the state of the surface of the subject S in various shapes, the optical inspection system 10 including the processing apparatus 16, a method of composing a surface composition image Is of the subject S, and a program for composing the surface composition image Is of the subject S.

Accordingly, a method of composing a surface composition image Is of a subject S, or a subject surface image composition method according to the modification of the present arrangement includes: irradiating a surface of a subject S moving relative to the illumination light with a plurality of beams of illumination light traveling in different directions in at least one plane; obtaining a plurality of captured images including a reference captured image and one or more captured images subsequent to the reference captured image by imaging the surface of the subject S with an imaging portion 24 at a predetermined frame rate; shifting the one or more captured images subsequent to the reference captured image while obtaining the one or more captured images; and composing at least one surface composition image Is of the subject S by superimposing the shifted captured images on the reference captured image or the one or more captured images obtained earlier.

Moreover, in the modification of the present arrangement, the method of composing a surface composition image Is of a subject S includes setting the shift amount of at least some of the captured images based on the frame rate in the imaging portion 24, the conveying speed of the subject S relative to the imaging portion 24, and the number of pixels of the imaging portion 24 in a direction along the conveying direction of the subject S relative to the imaging portion 24, when the at least one surface composition image Is of the subject S is composed.

Furthermore, in the modification of the present arrangement, the method of composing a surface composition image Is of a subject S includes performing image processing for defect identification on at least one surface composition image Is of the subject S.

A processing apparatus 16 configured to compose a surface composition image Is of a subject S according to the modification of the present arrangement includes one or more processors 52 configured to: obtain, while a surface of a subject S moving relative to the illumination light is irradiated, with a plurality of beams of illumination light traveling in different directions in at least one plane, a reference captured image I1 and one or more captured images 12, I3, ..., and In subsequent to the reference captured image I1 within a predetermined time with an imaging portion 24; shift the one or more captured images 12, I3, ..., and In subsequent to the reference captured image I1 while obtaining the one or more captured images I1, I2, I3, ..., and In; and compose at least one surface composition image Is of the subject S by sequentially superimposing the shifted captured images I2, I3, ... and In in order on one or more captured images I1, I2, ... obtained earlier.

A program for composing a surface composition image Is of the subject S, or a subject surface image composition program according to a modification of the present arrangement causes one or more processors 52 to execute: obtaining, while a surface of the subject S moving relative to the illumination light is irradiated with a plurality of beams of illumination light traveling in different directions in at least one plane, a reference captured image I1 and one or more captured images I1, I2, I3, ..., and In subsequent to the reference captured image I1 within a predetermined time with an imaging portion; shifting the one or more captured images 12, 13, ..., and In subsequent to the reference captured image I1 while obtaining the one or more captured images I2, I3, ..., and In; and composing at least one surface composition image Is of the subject S by sequentially superimposing the shifted captured images I2, I3, ... and In in order on one or more captured images I1, I2, ... obtained earlier.

When the one or more processors 52 compose the at least one surface composition image Is of the subject S, the one or more processors 52 are configured to set a shift amount of each of the captured images based on the frame rate in the imaging portion 24, a conveying speed of the subject S relative to the imaging portion 24, and the number of pixels of the imaging portion 24 in a direction along the conveying direction of the subject S relative to the imaging portion 24.

The processor 52 sets the shift amount, denoted by $\triangle x$, based on $\triangle x = (v \cdot n_m)/(2x_0 \cdot f_c)$. It is assumed herein that $x_0$ denotes half of the field of view of the imaging portion 24 (image sensor 44) along the conveying direction of the subject S, $n_m + 1$ denotes the number of pixels of the imaging portion 24 (image sensor 44) along the conveying direction of the subject S, $f_c$ denotes a frame rate of the imaging portion 24 (image sensor 44), and $v$ denotes the conveying speed of the subject S relative to the imaging portion 24 (image sensor 44).

When the one or more processors 52 shift the one or more captured images I2, I3, I4, and I5 and compose at least one surface composition image Is of the subject S by superimposing the captured images I2, I3, I4, and I5 on the reference captured image I1, the one or more processors 52 are configured to superimpose the shifted captured images I2, I3, 14, and I5 on the reference captured image I1, based on one or more of the four arithmetic operations.

The one or more processors 52 are configured to perform image processing for defect identification on at least one surface composition image Is of the subject S, and obtain a defect extraction image Id obtained by extracting a defect in the surface composition image Is of the subject S.

When the processor 52 performs the image processing for defect identification, the processor 52 performs arithmetic processing with convolutional image filtering on at least one surface composition image Is of the subject S.

(Second Arrangement)

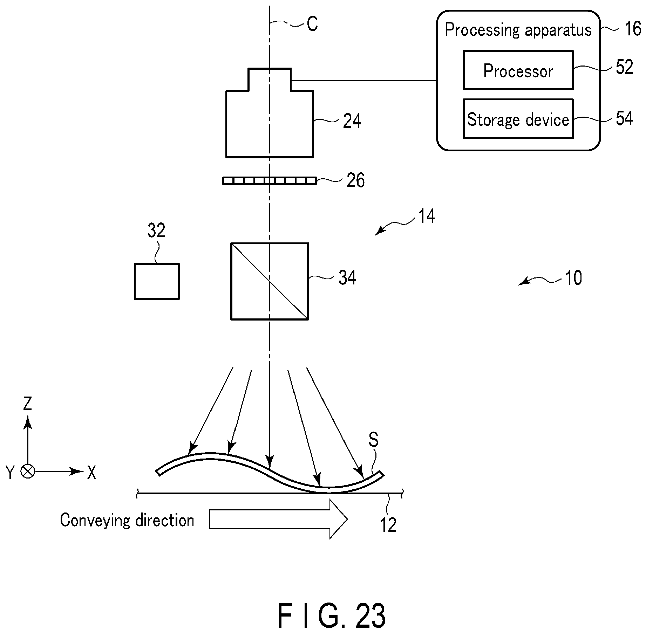

Next, the optical inspection system 10 according to the second arrangement will be described with reference to FIGS. 23 to 27. In the present arrangement, the optical inspection apparatus 14 of the optical inspection system 10 according to the first arrangement is modified, and the members same as those described in the first arrangement will be denoted by the same reference numerals, with a detailed description omitted.

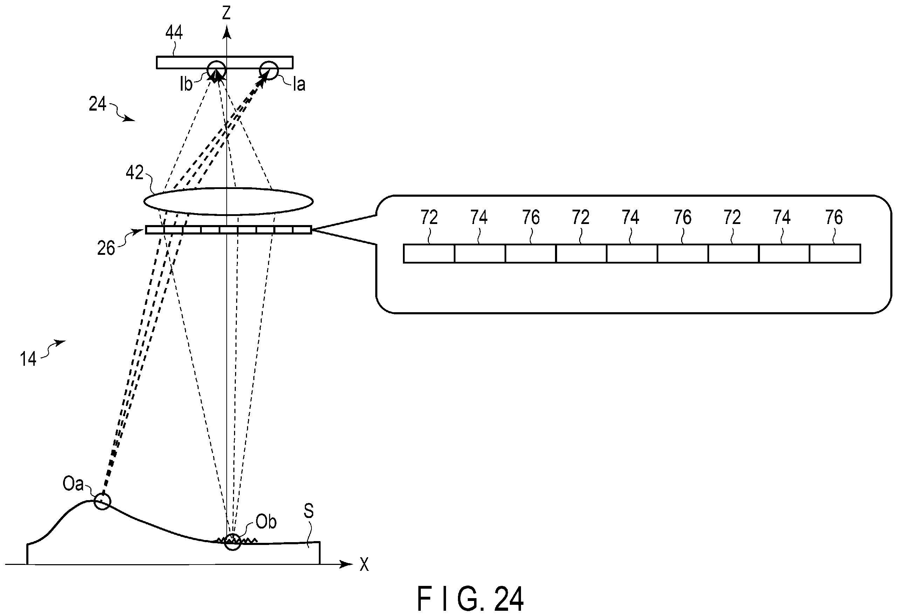

FIG. 23 is a schematic diagram showing an optical inspection system 10 according to the present arrangement. FIG. 24 is a schematic diagram showing an optical inspection apparatus 14 according to the present arrangement.

As shown in FIGS. 23 and 24, the optical inspection apparatus 14 according to the present arrangement includes a sheet-like color opening (wavelength selector) 26 that is orthogonal to the optical axis C and is parallel to, for example, the XY plane is provided on an optical axis C between a subject S and an image forming optical element 42 of an imaging portion 24. It is preferable that the color opening 26 is provided between, for example, the half mirror 34 of the illumination portion 22 and the image forming optical element 42 of the imaging portion 24.

The color opening 26 includes at least two or more wavelength selection regions (three wavelength selection regions 72, 74, and 76 in the present arrangement). It is assumed that they will be referred to as a first wavelength selection region 72, a second wavelength selection region 74, and a third wavelength selection region 76. The first wavelength selection region 72, the second wavelength selection region 74, and the third wavelength selection region 76 are aligned in a direction along the X axis. That is, each of the first wavelength selection region 72, the second wavelength selection region 74, and the third wavelength selection region 76 intersects the X axis. A direction extending in the first wavelength selection region 72, the second wavelength selection region 74, and the third wavelength selection region 76 is along the Y axis. That is, the first wavelength selection region 72, the second wavelength selection region 74, and the third wavelength selection region 76 extend along the Y axis. However, the configuration is not limited thereto, and each of the first wavelength selection region 72, the second wavelength selection region 74, and the third wavelength selection region 76 may intersect the Y axis.

The first wavelength selection region 72 allows a light beam in a wavelength spectrum including the first wavelength to pass therethrough. The expression "allowing a light beam to pass therethrough" means allowing a light beam to travel from an object point to an image point through transmission or reflection. On the other hand, the first wavelength selection region 72 substantially shields light beams of a second wavelength and a third wavelength different from the first wavelength. The term "shielding" means not allowing a light beam to pass through. That is, it means not allowing a light beam to travel from an object point to an image point. The second wavelength selection region 74 allows a light beam in a wavelength spectrum including the second wavelength to pass therethrough, but substantially shields light beams of the first and third wavelengths. The third wavelength selection region 76 allows a light beam in a wavelength spectrum including the third wavelength to pass therethrough, but substantially shields light beams of the first and second wavelengths. Accordingly, the wavelength selection regions 72, 74, and 76 of the color opening 26 allow light beams in three different wavelength spectra to selectively pass therethrough.

It is assumed, for example, that the first wavelength is 450 nm corresponding to blue light, that the second wavelength is 650 nm corresponding to red light, and that the third wavelength is 550 nm corresponding to green light. However, the configuration is not limited thereto, and each of the wavelengths may be suitably set.

It is assumed that each pixel of the image sensor 44 is configured to receive light beams of at least the first wavelength, the second wavelength, and the third wavelength. It is assumed, in the present arrangement, that each pixel of the image sensor 44 includes three color channels, namely, red, blue, and green. That is, it is assumed that each pixel of the image sensor 44 is configured to respectively receive blue light with a wavelength of 450 nm, red light with a wavelength of 650 nm, and green light with a wavelength of 550 nm in independent color channels. However, the color channels need not be completely independent from one another, and may substantially have a slight sensitivity to a wavelength other than the wavelength to which each color channel is sensitive.

In the present arrangement, the color opening 26 includes, for example, a plurality of sets of wavelength selection regions aligned in the +X direction for example, each set including a first wavelength selection region 72, a second wavelength selection region 74, and a third wavelength selection region 76 aligned in this order toward the +X direction.

An operation principle of the optical inspection system 10 according to the present arrangement will be described.

It is assumed, for example, that the surface of the subject S is irradiated with collimated light beams La and Lb, as shown in FIG. 24. It is assumed, in FIG. 24, that an object point Oa is on a mirror surface with no defects, and an object point Ob is on a corrugated surface with micron-size defects close in size to the wavelength of light. In this case, directional distribution of light reflected at the object point Oa, or BRDF (Bidirectional Reflectance Distribution Function) at the object point Oa has a narrow distribution. On the other hand, directional distribution of light reflected at the object point Ob, or BRDF at the object point Ob has a wider distribution than the directional distribution of light at the object point Oa. That is, the object point Oa and the object point Ob have different BRDFs.

Reflection light from the object point Oa is generated by illumination light La. The reflection light from the object point Oa passes through only the second wavelength selection region 74 of the color opening 26, and is formed into, for example, light with a wavelength of 650 nm (in the red-light wavelength spectrum). Alternatively, the reflection light from the object point Oa passes through the first wavelength selection region 72 and the second wavelength selection region 74, and is formed into light with a wavelength of 450 nm (in the blue-light wavelength spectrum) and a wavelength of 650 nm (in the red-light wavelength spectrum). Such light is captured by the imaging portion 24.

Reflection light from the object point Ob is generated by illumination light Lb. The reflection light from the object point Ob passes through, for example, a plurality of sets of wavelength selection regions of the color opening 26, each including the first wavelength selection region 72, the second wavelength selection region 74, and the third wavelength selection region 76. Accordingly, the light that has passed through the first wavelength selection region 72 is formed into light with the first wavelength (blue light), the light that has passed through the second wavelength selection region 74 is formed into light with the second wavelength (red light), and the light that has passed through the third wavelength selection region 76 is formed into light with the third wavelength (green light). Of the reflection light from the object point Ob, the light of the second and third wavelengths made incident on the first wavelength selection region 72 is shielded, the light of the first and third wavelengths made incident on the second wavelength selection region 74 is shielded, and the light of the first and second wavelengths made incident on the third wavelength selection region 76 is shielded.

If the reflection light from the object point Oa reaches the image forming optical element 42, the object point Oa is transferred to a first image point Ia by the image forming optical element 42. In the present arrangement, reflection light from the object point Ob reaches the image forming optical element 42, and the object point Ob is transferred to a second image point Ib.

In the case of acquiring a single image, if the illumination light La faces the same direction as the illumination light Lb, the reflection light from the object point Oa cannot reach the image forming optical element 42. This is because a normal direction to the surface of the subject S at the object point Oa differs from that at the object point Ob, and the reflection direction is determined according to the illumination direction and the normal direction. That is, the reflection light cannot reach the image forming optical element 42 unless the direction of illumination light is appropriately set according to the normal direction to the surface of the subject S. If the reflection light does not reach the image forming optical element 42, the object point Oa will not appear in an image. Accordingly, if the reflection light from the object point Oa does not reach the image forming optical element 42, the state of the surface of the object point Oa cannot be inspected from a single image.

The object point Ob is transferred to the second image point Ib by the image forming optical element 42. However, if the illumination light Lb faces the same direction as the illumination light La, the reflection light from the object point Ob cannot reach the image forming optical element 42. This is because a normal direction to the surface of the subject S at the object point Oa differs from that at the object point Ob, and the reflection direction is determined according to the illumination direction and the normal direction. That is, the reflection light cannot reach the lens unless the direction of illumination light is appropriately set according to the normal direction to the surface of the subject S. If the reflection light does not reach the image forming optical element 42, the object point Ob will not appear in an image. Accordingly, if the reflection light from the object point Ob does not reach the image forming optical element 42, the state of the surface S of the object point Ob cannot be inspected from a single image.

Through the above-described processing, a plurality of images I, each of which may be formed into a part of a surface composition image Is of the subject S, can be acquired by irradiating the object point Oa and the object point Ob with different normal directions with illumination light La and Lb with different directions.

Thereby, the processing apparatus 16 composes a single surface composition image Is of the subject S from a plurality of captured images, as described in the first arrangement.

At the first image point Ia, only red light, for example, is received by the image sensor 44. In this case, it can be perceived in the processing apparatus 16 that light has passed through a single type of wavelength selection region 74. Alternatively, at the first image point Ia, blue light and red light are received by the image sensor 44. In this case, it can be perceived in the processing apparatus 16 that light has passed through two types of wavelength selection regions 72 and 74.

On the other hand, at the second image point Ib, blue light, red light, and green light are received at the same time. In this case, it can be perceived in the processing apparatus 16 that light has passed through three types of wavelength selection regions 72, 74 and 76. Such a process of estimating the number of colors will be referred to as a "color number estimation process". The processor 52 of the processing apparatus 16 is configured to acquire the number of colors received at each of the image points Ia and Ib by the color number estimation process.

The surface composition image Is of the subject S has information on the number of colors acquired at each pixel. Accordingly, the processing apparatus 16 performs image processing based on information on the number of colors at each pixel, thereby extracting a defective portion. In the example of the present arrangement, in response to an output indicating that the processor 52 of the processing apparatus 16 has received three colors of light, it is determined that a defect exists at the object point corresponding to the position where the light has been received. In response to an output indicating that the processor 52 of the processing apparatus 16 has received only one color of light, it is determined that a defect does not exist at the object point corresponding to the position where the light has been received. In response to an output indicating that the processor 52 of the processing apparatus 16 has received two colors of light, it is determined that a defect does not exist at an object point corresponding to the position where the light has been received, since the light may pass through a boundary between the regions 72 and 74 or a boundary between the regions 74 and 76.

Light that is reflected toward various directions according to the surface properties and the fine shapes of the subject S is generally referred to as "scattered light". As described above, the breadth of distribution of scattered light can be represented in BRDF. Also, it can be construed that the BRDF becomes larger as the number of colors increases, and that the BRDF becomes smaller as the number of colors decreases. That is, a difference in BRDF at each object point can be identified if the number of colors at each image point can be acquired by the color number estimation process. It is thereby possible to perform a color number estimation process of estimating, from images acquired by capturing images of the subject S with light from the subject S that has passed through the color opening 26 including at least two different wavelength selection regions 72, 74, and 76, the number of wavelength selection regions 72, 74, and 76 through which the light has passed to obtain the number of colors, thereby identifying, based on the obtained number of colors, a direction distribution of scattered light from the surface of the subject S. Since the BRDF has a correlation with the properties and the fine shapes of the surface S, the present arrangement produces an advantageous effect of identifying a difference in properties and fine shapes of the surface S between the object points Oa and Ob on the surface of the subject S. Thereby, the processing apparatus 16 is configured to identify the properties and fine shapes (the state of the surface) of the subject S in a non-contact manner.

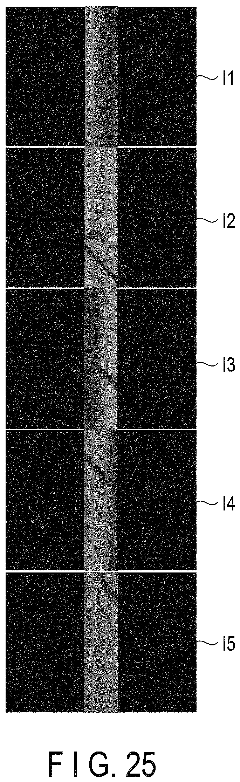

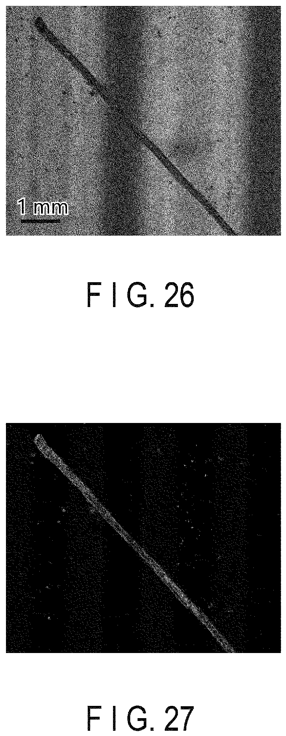

FIG. 25 shows an arrangement of images I1, I2, I3, I4, and I5 acquired by photographing the surface of the subject S, which has been obtained by scratching a surface of a plastic flat plate, at a suitable frame rate using the optical inspection system 10 according to the present arrangement (step S11). The processing apparatus 16 is configured to obtain a surface composition image Is shown in FIG. 26 by, for example, shifting the images I1, I2, I3, I4, and I5 as described in the first arrangement and superimposing them. That is, in the present arrangement, images I1, I2, ..., and In containing such defect existence/absence information are suitably shifted, and at least a single surface composition image Is of the subject S is composed based on the flow shown in FIG. 14 (step S12) .

Based on at least one surface composition image Is of the subject S, the one or more processors 52 subject at least one surface composition image Is of the subject S to image processing for defect identification, and obtains a defect extraction image Id obtained by extracting a defect in the surface composition image Is of the subject S (step S13). The one or more processors 52 perform image processing for defect identification by performing arithmetic processing with convolutional image filtering on at least one surface composition image Is of the subject S.

Since the object point Oa is, for example, on a mirror surface, the object point Oa from which light is reflected has a small BRDF. Even in such a case, if light passes through a boundary between the first wavelength selection region 72 and the second wavelength selection region 74, two colors of light may be made incident on the image sensor 44. Accordingly, it is preferable that the color opening 26 be formed as one or more sets each including three regions. It is preferable that the regions 72, 74, and 76 have the same width, but may have different widths.

By providing a multi-color color opening (color filter) in the imaging portion 24, the color of the photographed image can be changed according to the BRDF of a curved surface from which light is reflected. That is, the processor 52 can acquire the BRDF information c as color information, and can identify a defect on the surface of the subject S based on the BRDF.

Specifically, the processor 52 detect a defect by performing image processing on color information of an acquired image. Examples of the image processing include linear detection, edge detection processing, frequency filtering, Canny filtering, Laplacian filtering, Gaussian filtering, DoG processing, etc. Any image processing configured to detect a defect of the subject S may be adopted.

As an example of a scratch existing on the surface of a plastic plate, a surface composition image Is of the subject S based on images I1, I2, ..., and In captured by the optical inspection apparatus 14 of the optical inspection system 10 according to the present arrangement is shown in FIG. 26, and a defect identification image Id obtained by subjecting the surface composition image Is to image processing to identify the defect is shown in FIG. 27. For the image processing, a DoG process was used. As can be seen from FIGS. 26 and 27, it can be seen that only the scratch has been sharpened in the acquired image.

The processing apparatus 16 according to the present arrangement obtains a single surface composition image Is (see FIG. 26) based on a plurality of images I1, I2, ..., and In (see FIG. 25) based on the flow (see FIG. 14) described in the first arrangement, and then obtains a defect identification image Id (see FIG. 27) for identifying a defect. Since the processing apparatus 16 composes the surface composition image Is of the subject S and then performs image processing for defect identification the surface composition image Is of the subject S, image processing needs to be performed only for the single image Is, thus reducing the cost required in calculation and resulting in high-speed detection. In order for the processing apparatus 16 to obtain a defect identification image Id, not all of the images I1, I2, ..., and In captured by the imaging portion 24 need to be held or stored in the processing apparatus 16. That is, since the defect identification image Id can be obtained if the surface composition image Is of the subject S is held, as described in the first arrangement, the processing apparatus 16 need not hold or store, in the storage device 54, data of all the images sequentially transferred from the imaging portion 24 to the processing apparatus 16. The non-necessity of holding or storing all the images obtained at the imaging portion 24 results in reduction in the processing cost required for holding or storing. Also, the processing apparatus 16 is advantageous in that the reduction in the processing cost enables a high-speed operation.

According to the present arrangement, the optical inspection apparatus 14 of the optical inspection system 10 includes a color opening 26 provided between the subject S and the imaging portion 24. The color opening 26 includes at least two wavelength selection regions 72, 74, and 76 configured to allow light beams in different wavelength spectra to selectively pass therethrough in at least one plane (ZX plane). The imaging portion 24 (image sensor 44) is configured to receive light beams in different wavelength spectra passing through the wavelength selection regions 72, 74, and 76. The processing apparatus 16 (processor 52) is configured to output a defect on the surface of the subject S based on the number of colors of the light beams in the wavelength spectra received by the imaging portion 24.

According to the present arrangement, it is possible to provide a processing apparatus 16 configured to compose a defect identification image Id of a surface of a subject S in various shapes, an optical inspection system 10 including the processing apparatus 16, and a composition program configured to compose a defect identification image Id of the surface of the subject S.

(Modification)

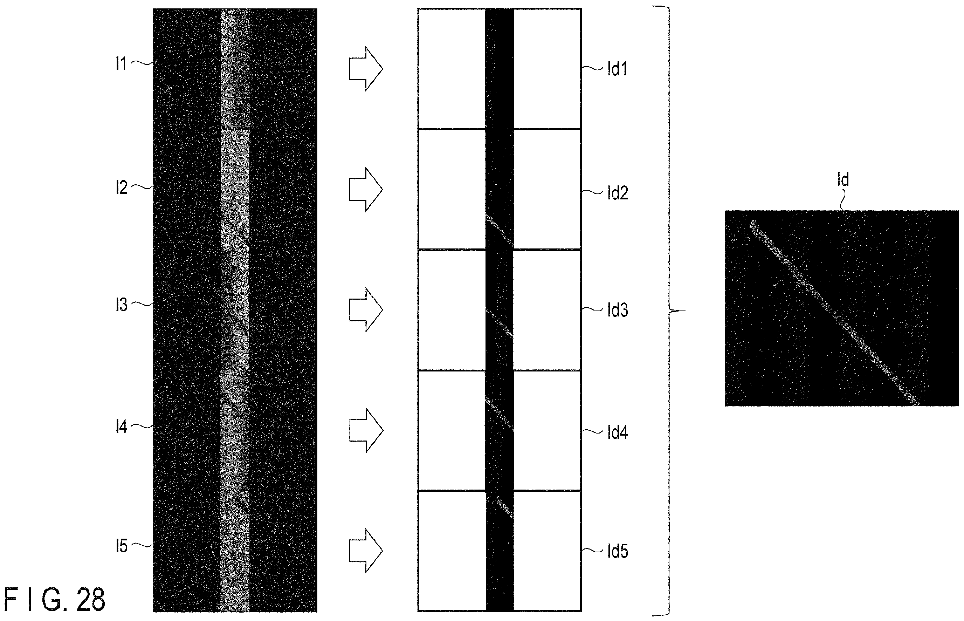

Next, an optical inspection system 10 according to a modification of the second arrangement will be described with reference to FIGS. 28 to 29.

The processing apparatus 16 according to the second arrangement is configured to compose a surface composition image Is (see FIG. 26) of a subject S based on captured images I1, I2, ..., and In, perform image processing on the surface composition image Is of the subject S, and then compose a defect identification image Id (see FIG. 27) in which a defect has been extracted.

As shown in FIG. 28, the processing apparatus 16 composes defect identification images Id1, Id2, ..., and Idn every time images I1, I2, ..., and In are acquired, and suitably superimposes them to compose a single defect identification image Id, without composing a single surface composition image Is of the subject S.

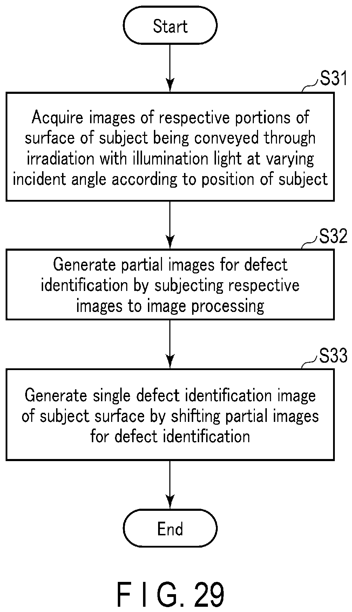

The processor 52 of the processing apparatus 16 operates based on the flow shown in FIG. 29.

First, the processing apparatus 16 acquires images I1, I2, ..., and In (step S31). The processing apparatus 16 subjects the images I1, I2, ..., and In to a defect identification process, and obtains partial composition images Id1, Id2, ..., and Idn for defect identification (step S32). Accordingly, according to the present modification, the processor 52 extracts a defect in the one or more captured images I1, I2, ..., and In by performing defect identification image processing on the one or more captured images I1, I2, ..., and In. The processor 52 performs the image processing for defect identification by performing arithmetic processing with convolutional image filtering on the captured images.

The processing apparatus 16 obtains a single defect identification image Id by suitably shifting the obtained partial composition images Id1, Id2, ..., and Idn for defect identification, and performing, for example, one or more of the four arithmetic operations on the partial composition images Id1, Id2, ..., and Idn (step S33). If the same defect is identified across the images I1, I2, ..., and In, signals of the identified defect are superimposed and increased during the course of the processing apparatus 16 composing a plurality of partial composition images (defect identification conversion images) Id1, Id2, ..., and Idn for defect identification from the images I1, I2, ..., and In, and obtaining a single defect identification image Id by, for example, superimposing them. That is, the processing apparatus 16 is advantageous in that defect identification can be performed with higher robustness and with higher precision.

A processing apparatus 16 configured to compose a defect identification image Id for identifying a defect on a surface of a subject S, or subject surface defect identification image according to the present arrangement includes: one or more processors 52 configured to: obtain a reference defect identification image (reference defect identification conversion image) Id1 corresponding to the reference captured image I1 by performing the reference captured image I1 to image processing for defect identification while the one or more processors 52 obtain the reference captured image I1 and one or more captured images I2, I3, ..., and In subsequent to the reference captured image I1 with an imaging portion 24 at a predetermined frame rate while a surface of a subject moving relative to the illumination light is irradiated with a plurality of beams of illumination light traveling in different directions; obtain one or more defect identification images (defect identification conversion images) Id2, Id3, ..., Idn by performing the one or more captured images I2, I3, ..., and In subsequent to the reference captured image I1 to the image processing for defect identification while the one or more processors 52 obtains the one or more captured images; shift the one or more defect identification images Id2, Id3, ..., Idn; and compose at least one defect identification image Id for identifying a defect on the surface of the subject S by sequentially superimposing the shifted one or more defect identification images Id2, Id3, ..., Idn on the reference defect identification image Id1. The timing at which the processing device 16 converts the captured image In into the defect identification image Idn and the timing at which the processing device 16 obtains the captured image In+1 are in random order.

A method of composing a defect identification image Id, or a defect identification image composition method according to the present arrangement includes: irradiating, with a plurality of beams of illumination light traveling in different directions in at least one plane, a surface of a subject S moving relative to the illumination light; obtaining a plurality of captured images I1, I2, ..., and In including a reference captured image I1 by imaging the surface of the subject S with an imaging portion 24 within a predetermined time; generating defect identification conversion images Id1, Id2, Id3, ..., and Idn of the plurality of captured images I1, I2, ..., and In obtained within a predetermined time by performing image processing for defect identification on the plurality of captured images I1, I2, ..., and In; shifting one or more defect identification conversion images Id2, Id3, ..., and Idn selected from the defect identification conversion images Id1, Id2, ..., and Idn; and composing at least one defect identification image Id by superimposing the shifted one or more defect identification conversion images Id2, Id3,..., and Idn on the reference defect identification conversion image Id1 corresponding to the reference captured image I1.

In other words, a program for composing a defect identification image Id according to the present arrangement includes causing one or more processors 52 to: irradiate, with a plurality of beams of illumination light traveling in different directions in at least one plane, a surface of a subject S moving relative to the illumination light; obtain, at different points in time, a plurality of captured images I1, I2, ..., and In including a reference captured image I1 by imaging a surface of the subject S with an imaging portion 24; generate defect identification conversion images Id1, Id2, ..., and Idn of the plurality of captured images I1, I2, ..., and In obtained at the different points in time by performing image processing for defect identification on the plurality of captured images I2, I3, ..., and In; shift one or more defect identification conversion images Id2, Id3, ..., and Idn selected from the defect identification conversion images Id1, Id2, ..., and Idn; and compose at least one defect identification image Id by superimposing the shifted one or more defect identification conversion images Id2, Id3, ..., and Idn on a reference defect identification conversion image Id1 corresponding to the reference captured image I1.

According to the present modification, it is possible to provide a processing apparatus 16 configured to compose a defect identification image Id of a surface of a subject S in various shapes, an optical inspection system 10 including the processing apparatus 16, a method of composing a defect identification image Id, and a composition program configured to compose a defect identification image Id of the surface of the subject S.

(Third Arrangement)

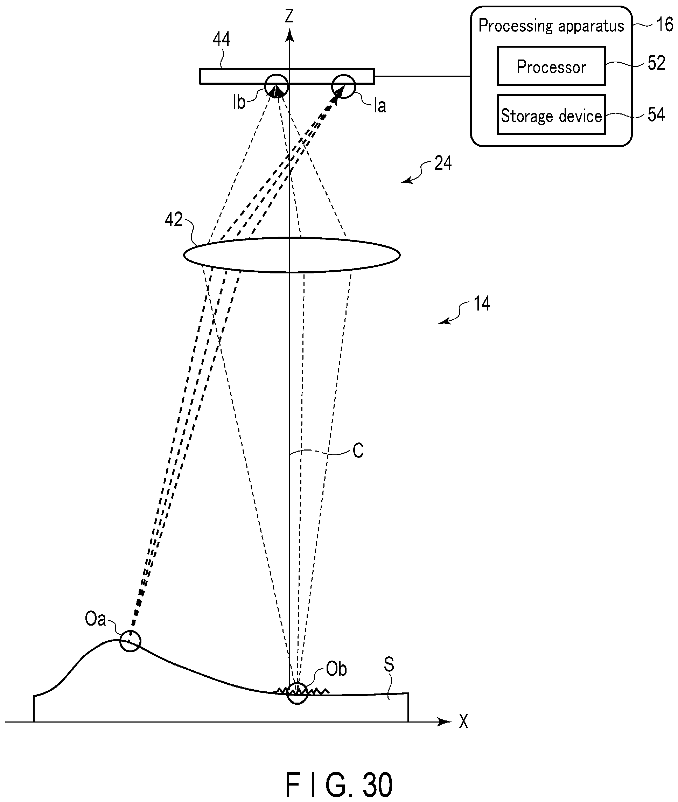

Next, an optical inspection system 10 according to a third arrangement will be described with reference to FIGS. 30 to 32. In the present arrangement, the optical inspection system 10 according to the first and second arrangements is modified, and the members that are the same as those described in the first and second arrangements will be denoted by the same reference numerals, with a detailed description omitted.

In the present arrangement, an example will be described in which the processing apparatus 16 performs a process of estimating an angle according to the position of the surface of the subject S, in addition to or in place of the above-described process of composing a surface composition image Is of the subject S. Herein, a description on the process of composing a surface composition image Is of the subject S will be omitted.

As shown in FIG. 30, regular reflection light from the surface of the subject S being conveyed by the conveyor portion 12, for example, changes according to the inclination angle of the surface of the subject S. Also, the position in the ZX plane of the regular reflection light incident on the image sensor 44 changes according to the inclination angle with respect to the X-axis on the surface of the subject S. In FIG. 30, illustration of the illumination portion 22 is omitted.

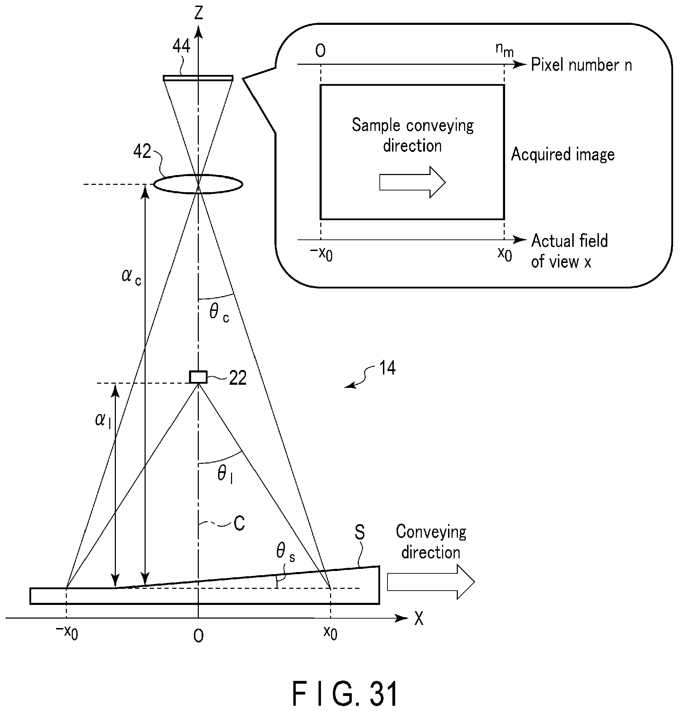

The optical inspection apparatus 14 shown in FIG. 31 will be taken as an example. The light from the illumination portion 22 as not shown in FIG. 31 is collimated light traveling toward the surface of the subject S along the optical axis C from the optical axis C of the imaging portion 24 in the ZX plane, is collimated light traveling from the optical axis C of the imaging portion 24 to the surface of the subject S at the $+x_0$ position, and is collimated light traveling from the optical axis C of the imaging portion 24 to the surface of the subject S at the $-x_0$ position. Accordingly, the illumination portion 22 irradiates the surface of the subject S with illumination light traveling toward different directions in at least one plane (ZX plane).

It is assumed that a distance between the image forming optical element 42 of the imaging portion 24 and the surface of the subject S is $a_c$. It is assumed that an angle formed by a virtual line connecting the image forming optical element 42 and a half $x_0$ of the field of view F of the imaging portion 24 along the X-axis direction and the optical axis of the imaging portion 24 is θc.

It is assumed that the light source 32 is a point light source on the optical axis of the imaging portion 24. It is assumed that a distance between the light source 32 and the surface of the subject S is $a_l$. It is assumed that an angle formed by the optical axis of the imaging portion 24 and the half $x_0$ of the field of view F of the imaging portion 24 along the X-axis direction is θc. It is assumed that an angle formed by a virtual line connecting the light source 32 and the half $x_0$ of the field of view F of the imaging portion 24 and an optical axis of the imaging portion 24 is θl.

An inclination angle θs at a position on the surface of the subject S and a pixel position n at which light reflected at that position appears in the image (on the image sensor 44) can be expressed by the following relational expression:

$$\theta s = 1/2\tan^{-1}\{x_0/a_c(2n/n_m-1)\}+1/2\tan^{-1}\{x_0/a_l(2n/n_m-1)\}$$

Thus, in the field of view F, if light is input to the image sensor 44 and a pixel position n at which each of the captured images I1, I2, ..., and In were obtained is detected, an angle θs is calculated, since $x_0$, $a_c$, $n_m$, and $a_l$ are known from the optical inspection apparatus 14. The processing apparatus 16 is configured to determine the pixel position n based on, for example, the pixel value of each of the captured images I1, I2, ..., and In, namely, brightness, etc. Accordingly, the pixel position n on each of the captured images I1, I2, ..., and In and the inclination angle of the surface of the subject S form a one-to-one correspondence.

If, for example, the inclination angle θs is close to 0°, the surface of the subject S is parallel to the XY plane, and the subject S is irradiated with illumination light along the optical axis of the imaging portion 24, regular reflection light is made incident on the position shown by a mark Ob (see FIG. 30) of the actual field of view F on each of the captured images I1, I2, ..., and In. Reflection light from the surface of the subject S is made incident on the imaging portion 24 according to the inclination angle of the surface of the subject S. The reflection light from the surface of the subject S is split into light incident on the +X-direction side and light incident on the -X-direction side of the image sensor 44 of the imaging portion 24, according to the direction in which the normal direction of the inclination surface faces. In the example of the inclination surface at the position shown by the object point Oa in FIG. 30, reflection light from the surface of the subject S is made incident on the +X-direction side of the image sensor 44 of the imaging portion 24. The larger the inclination angle of the inclination surface at the position denoted by the object point Oa, the reflection light from the surface of the subject S is made incident on a side of the image sensor 44 of the imaging portion 24 closer to $+x_o$, and the smaller the inclination angle, the reflection light from the surface of the subject S is made incident on a position of the image sensor 44 of the imaging portion 24 closer to the optical axis C.

Also, if the inclination surface is inclined in a direction opposite to the direction shown at the position denoted by the object point Oa, reflection light from the surface of the subject S is made incident on the -X-direction side of the image sensor 44 of the imaging portion 24, even though such a configuration is not illustrated.

As in the example shown in FIGS. 5 to 21 using the optical inspection apparatus 14 described in the first arrangement, if the optical inspection apparatus 14 photographs a plurality of images I1, I2, ..., and In of the subject S being conveyed, the subject S appears differently in the images I1, I2, ..., and In according to the inclination angle and the shape of the curved surface. That is, in the images I1, I2, ..., and In acquired by photographing the subject S being conveyed, the subject S is not necessarily kept at the original position. Based on the angle θs, the inclination angle of the surface of the subject S is estimated from the obtained images I1, I2, ..., and In. That is, the processing apparatus 16 is configured to estimate an inclination angle of the surface of the subject S based on the actually obtained images I1, I2, ..., and In.

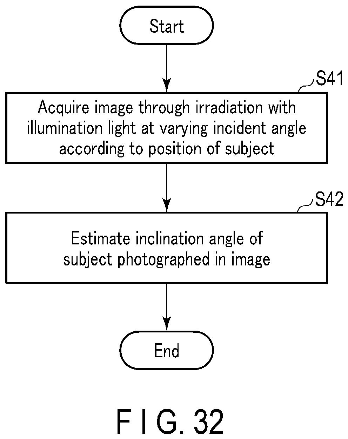

Accordingly, as shown in FIG. 32, the processor 52 of the processing apparatus 16 acquires a plurality of images by irradiating the surface of the subject S with illumination light at an incident angle that varies according to the position of the subject S, while causing the conveyor portion 12 to convey the subject S (step S41). Each of the acquired images I1, I2, ..., and In contains angle information of the surface of the subject S.

The processor 52 of the processing apparatus 16 outputs (estimates) an inclination angle of the surface of the subject S based on the images I1, I2, ..., and In (step S42). Accordingly, with the optical inspection system 10 according to the present arrangement, it is possible, for example, to estimate the angle of the surface of the subject S. Thereby, the processor 52 of the processing apparatus 16 is configured to estimate whether or not the surface of the subject S is formed in a desired shape, as well as, for example, a scratch that may exist on the surface of the subject S.

Accordingly, a method of estimating an angle of a surface of a subject S, or a subject surface angle estimation method according to the present arrangement includes: irradiating a surface of a subject S with beams of illumination light traveling in different directions in at least one plane; obtaining captured images I1, I2, ..., and In by capturing an image of the surface of the subject S with an imaging portion 24 and specifying a position of a pixel on which the illumination light has been made incident in the captured images I1, I2, ..., and In; and estimating an inclination angle of the surface of the subject S appearing in the captured images I1, I2, ..., and In based on the position of the pixel on which the illumination light is made incident.

Accordingly, a program for estimating an angle of a surface of a subject S, or a subject surface angle estimation program according to the present arrangement includes causing one or more processors 52 to execute: estimating an inclination angle of the surface of the subject S appearing in each of the captured images I1, I2, ..., and In based on a position of a pixel on which the illumination light has been made incident in the one or more captured images I1, I2, ... and In obtained by the imaging portion 24 while a surface of a subject is irradiated with a plurality of beams of illumination light traveling in different directions in at least one plane to a surface of a subject S.

A processing apparatus 16 configured to calculate an inclination angle of a surface of a subject S according to the present arrangement includes one or more processors 52 configured to: estimate an inclination angle of the surface of the subject S appearing in each of the captured images I1, I2, ..., and In based on a position of a pixel on which the illumination light has been made incident in the one or more captured images I1, I2, ... and In obtained by the imaging portion 24, when irradiating a plurality of beams of illumination light traveling in different directions in at least one plane to a surface of a subject S.

According to the arrangement, the processor 52 estimates the inclination angle of the surface of the subject S based on:

$$\theta_s = 1/2 \tan^{-1}\{x_0/a_c(2n/n_m-1)\} + 1/2\tan^{-1}\{x_0/a_1(2n/n_m-1)\},$$

where:

$a_c$ denotes a distance between the imaging portion 24 and the surface of the subject S,

$x_0$ denotes half of a field of view F of the imaging portion 24 along a conveying direction of the subject S,

$a_l$ denotes a distance between a light source 32 of the illumination light and the surface of the subject S in a case where the light source 32 is a point light source on an optical axis C of the imaging portion 24,

$\theta_s$ denotes an inclination angle at a position on the surface of the subject S,

$n_m+1$ (where $n_m$ is a natural number) denotes a number of pixels of the imaging portion 24 along the conveying direction of the subject S, and

n denotes a pixel position at which light from the surface of the subject S is made incident in the one or more captured images obtained by the imaging portion 24.

According to the present arrangement, it is possible to provide a method of estimating an angle of a surface of a subject S and a program for estimating an inclination angle of the surface of the subject S.

According to at least one arrangement described above, it is possible to provide a processing apparatus configured to perform processing to grasp a state of a subject surface in various shapes or used for subject-surface defect identification image composition, an optical inspection system including the processing apparatus, a subject surface image composition method, a defect identification image composition method, a subject surface image composition program, a subject surface angle estimation method, and a subject surface inclination angle estimation program.

While certain arrangements have been described, these arrangements have been presented by way of example only, and are not intended to limit the scope of the inventions. Indeed, the apparatuses, the systems, the methods, and the programs described herein may be embodied in a variety of other forms; furthermore various omissions, substitutions and changes in the form of the apparatuses, the systems, the methods, and the programs described herein may be made.

Clause 1. A processing apparatus comprising:

one or more processors configured to:

shift one or more captured images selected from a plurality of captured images including a reference captured image, the plurality of captured images having been obtained with an imaging portion within a predetermined time while a surface of a subject moving relative to the illumination light is irradiated with a plurality of beams of illumination light traveling in different directions in at least one plane; and

compose at least one subject surface image by superimposing the shifted one or more captured images on the reference captured image.

Clause 2. A processing apparatus comprising:

one or more processors configured to:

obtain a reference captured image and one or more captured images subsequent to the reference captured image within a predetermined time with an imaging portion, while a surface of a subject moving relative to the illumination light is irradiated with a plurality of beams of illumination light traveling in different directions in at least one plane;

shift the one or more captured images subsequent to the reference captured images while obtaining the one or more captured images; and

compose at least one subject surface image by sequentially superimposing the shifted one or more captured images in order obtained earlier.

Clause 3. The processing apparatus according to Clause 1 or 2, wherein

the one or more processors are configured to set a shift amount of each of the one or more captured images based on a frame rate of the imaging portion, a conveying speed of the subject relative to the imaging portion, and a number of pixels of the imaging portion in a direction along the conveying direction of the subject relative to the imaging portion when the one or more processors compose the at least one subject surface image.

Clause 4. The processing apparatus according to Clause 3, wherein

the one or more processors are configured to set the shift amount, denoted by $\Delta x$, based on:

$$\Delta x = (v \cdot n_m)/(2x_0 \cdot f_c)$$

where:

$x_0$ denotes half of a field of view of the imaging portion along the conveying direction of the subject,
$n_m + 1$ denotes the number of pixels of the imaging portion along the conveying direction of the subject,
$f_c$ denotes the frame rate of the imaging portion, and
$\nu$ denotes the conveying speed of the subject relative to the imaging portion.

Clause 5. The processing apparatus according to any one of Clauses 1 to 4, wherein
the one or more processors are configured to superimpose the shifted one or more captured images on the reference captured image based on one or more of four arithmetic operations when the one or more processors shifts the one or more captured images, and composes the at least one subject surface image by superimposing the one or more captured images.

Clause 6. The processing apparatus according to any one of Clauses 1 to 5, wherein
the one or more processors are configured to:

perform defect identification image processing on at least one of: the one or more captured images, and the at least one subject surface image; and
extract a defect in the at least one of: the one or more captured images, and the at least one subject surface image.

Clause 7. The processing apparatus according to Clause 6, wherein
the one or more processors are configured to perform arithmetic processing with convolutional image filtering on the at least one of: the one or more captured images, and the at least one subject surface image, when the one or more processors perform defect identification image processing.

Clause 8. A processing apparatus configured to compose subject surface defect identification image, the processing apparatus comprising:
one or more processors configured to:

obtain a reference defect identification image corresponding to a reference captured image by performing the reference captured image to image processing for defect identification while the one or more processors obtain the reference captured image and one or more captured images subsequent to the reference captured image with an imaging portion at a predetermined frame rate while a surface of a subject moving relative to the illumination light is irradiated with a plurality of beams of illumination light traveling in different directions;
obtain one or more defect identification images by performing the one or more captured images subsequent to the reference captured image to the image processing for defect identification while the one or more processors obtains the one or more captured images;
shift the one or more defect identification images; and
compose at least one defect identification image for defect identification of the surface of the subject by sequentially superimposing the shifted one or more defect identification images on the reference defect identification image.

Clause 9. A processing apparatus configured to calculate subject surface inclination angle, the processing apparatus comprising:
one or more processors configured to:
estimate an inclination angle of a surface of a subject appearing in one or more captured images based on a position of a pixel on which illumination light is made incident in the one or more captured images, when obtaining one or more captured images with an imaging portion while a surface of a subject is irradiated with a plurality of beams of illumination light traveling in different directions in at least one plane.

Clause 10. The processing apparatus according to Clause 9, wherein

the one or more processors are configured to estimate the inclination angle of the surface of the subject based on:

$$\theta_s = 1/2 \tan^{-1}\{x_0/a_c(2n/n_m - 1)\} + 1/2 \tan^{-1}\{x_0/a_1(2n/n_m - 1)\},$$

where:

$a_c$ denotes a distance between the imaging portion and the surface of the subject,
$x_0$ denotes half of a field of view F of the imaging portion along a conveying direction of the subject relative to the imaging portion,

$a_l$ denotes a distance between a light source of the illumination light and the surface of the subject in a case where the light source of the illumination light is a point light source on an optical axis of the imaging portion,

$\theta_s$ denotes an inclination angle at a position on the surface of the subject,

$n_m+1$ (where $n_m$ is a natural number) denotes a number of pixels of the imaging portion along the conveying direction of the subject relative to the imaging portion, and

n denotes a pixel position at which light from the surface of the subject is made incident in the one or more captured images obtained by the imaging portion.

Clause 11. An optical inspection system comprising:

the processing apparatus according to any one of Clauses 1 to 10;
an illumination portion configured to irradiate the surface of the subject with the plurality of beams of illumination light traveling in different directions;
the imaging portion configured to image the surface of the subject at a predetermined frame rate; and
a conveyor portion configured to move the surface of the subject in a predetermined direction relative to the illumination portion and the imaging portion.

Clause 12. The optical inspection system according to Clause 11, further comprising:

a color opening provided between the subject and the imaging portion, wherein
the color opening includes at least two wavelength selection regions configured to allow light beams in different wavelength spectra to selectively pass therethrough in the at least one plane,
the imaging portion is configured to receive the light beams in the different wavelength spectra passing through the wavelength selection regions, and
the processing apparatus is configured to output a defect on the surface of the subject based on a number of colors of the light beams in the wavelength spectra received by the imaging portion.

Clause 13. A subject surface image composition method, comprising:

irradiating, with a plurality of beams of illumination light traveling in different directions in at least one plane, a surface of a subject moving relative to the illumination light;
obtaining, at different points in time, a plurality of captured images including a reference captured image by imaging the surface of the subject with an imaging portion;
shifting one or more captured images selected from the plurality of captured images; and
composing at least one subject surface image by superimposing the shifted one or more captured images on the reference captured image.

Clause 14. A subject surface image composition method, comprising:

irradiating a surface of a subject moving relative to the illumination light with a plurality of beams of illumination light traveling in different directions in at least one plane;
obtaining a plurality of captured images including a reference captured image and one or more captured images subsequent to the reference captured image by imaging the surface of the subject with an imaging portion, at a predetermined frame rate; and
shifting the one or more captured images subsequent to the reference captured image while obtaining the one or more captured images; and
composing at least one subject surface image by superimposing the shifted captured images on one or more captured images obtained earlier.

Clause 15. The subject surface image composition method according to Clause 13 or 14, wherein the shifting the captured images includes setting a shift amount of at least some of the captured images based on a frame rate of the imaging portion, a conveying speed of the subject relative to the imaging portion, and a number of pixels of the imaging portion in a direction along the conveying direction of the subject relative to the imaging portion, when the at least one subject surface image is composed.

Clause 16. The subject surface image composition method according to Clause 13 or 14, further comprising image processing for defect identification which is performed on the at least one subject surface image.

Clause 17. A defect identification image composition method, comprising:

irradiating a surface of a subject moving relative to the illumination light with a plurality of beams of illumination light traveling in different directions in at least one plane;

obtaining a plurality of captured images including a reference captured image by imaging the surface of the subject with an imaging portion within a predetermined time ;

generating defect identification conversion images of the plurality of captured images obtained within a predetermined time by performing image processing for defect identification on the plurality of captured images;

shifting one or more defect identification conversion images selected from the defect identification conversion images; and

composing at least one defect identification image by superimposing the shifted one or more defect identification conversion images on a reference defect identification conversion image corresponding to the reference captured image.

Clause 18. A subject surface image composition program causing one or more processors to execute:

shifting one or more captured images selected from a plurality of captured images including a reference captured image,

the plurality of captured images having been obtained with an imaging portion within a predetermined time while a surface of a subject moving relative to the illumination light is irradiated with a plurality of beams of illumination light traveling in different directions in at least one plane; and

composing at least one subject surface image by superimposing the shifted one or more captured images on the reference captured image.

Clause 19. A subject surface image composition program causing one or more processors to execute:

obtaining a reference captured image and one or more captured images subsequent to the reference captured image within a predetermined time with an imaging portion, while a surface of a subject moving relative to the illumination light is irradiated with a plurality of beams of illumination light traveling in different directions in at least one plane;

shifting the one or more captured images subsequent to the reference captured image while obtaining the one or more captured images; and

composing at least one subject surface image by sequentially superimposing the shifted one or more captured images in order obtained earlier.

Clause 20. A subject surface angle estimation method, comprising:

irradiating a surface of a subject with beams of illumination light traveling in different directions in at least one plane;

obtaining a captured image by capturing the surface of the subject with an imaging portion and specifying a position of a pixel on which the illumination light is made incident in the captured image; and

estimating an inclination angle of the surface of the subject appearing in the captured image based on the position of the pixel on which the illumination light is made incident.

Clause 21. A subject surface angle estimation program causing one or more processors to execute:

estimating an inclination angle of the surface of the subject appearing in the captured images based on a position of a pixel on which the illumination light is made incident in the one or more captured images with an imaging portion while a surface of a subject is irradiated with a plurality of beams of illumination light traveling in different directions in at least one plane.

**Claims**

1. A processing apparatus comprising:

one or more processors configured to:

shift one or more captured images selected from a plurality of captured images including a reference captured image,

the plurality of captured images having been obtained with an imaging portion within a predetermined time while a surface of a subject moving relative to the illumination light is irradiated with a plurality of beams of illumination light traveling in different directions in at least one plane; and

compose at least one subject surface image by superimposing the shifted one or more captured images on the reference captured image.

2. The processing apparatus according to claim 1, wherein
the one or more processors are configured to set a shift amount of each of the one or more captured images based on a frame rate of the imaging portion, a conveying speed of the subject relative to the imaging portion, and a number of pixels of the imaging portion in a direction along the conveying direction of the subject relative to the imaging portion when the one or more processors compose the at least one subject surface image.

3. The processing apparatus according to claim 2, wherein

the one or more processors are configured to set the shift amount, denoted by $\Delta x$, based on:

$$\Delta x = (\nu \cdot n_m) / (2x_0 \cdot f_c)$$

where:

$x_0$ denotes half of a field of view of the imaging portion along the conveying direction of the subject,
$n_m+1$ denotes the number of pixels of the imaging portion along the conveying direction of the subject,
$f_c$ denotes the frame rate of the imaging portion, and
$\nu$ denotes the conveying speed of the subject relative to the imaging portion.

4. The processing apparatus according to any one of claims 1 to 3, wherein
the one or more processors are configured to superimpose the shifted one or more captured images on the reference captured image based on one or more of four arithmetic operations when the one or more processors shift the one or more captured images, and compose the at least one subject surface image by superimposing the one or more captured images.

5. The processing apparatus according to any one of claims 1 to 4, wherein
the one or more processors are configured to:

perform defect identification image processing on at least one of: the one or more captured images, and the at least one subject surface image; and
extract a defect in the at least one of: the one or more captured images, and the at least one subject surface image.

6. The processing apparatus according to claim 5, wherein
the one or more processors are configured to perform arithmetic processing with convolutional image filtering on the at least one of: the one or more captured images, and the at least one subject surface image, when the one or more processors perform defect identification image processing.

7. An optical inspection system comprising:

the processing apparatus according to any one of claims 1 to 6;
an illumination portion configured to irradiate the surface of the subject with the plurality of beams of illumination light traveling in different directions;
the imaging portion configured to image the surface of the subject at a predetermined frame rate; and
a conveyor portion configured to move the surface of the subject in a predetermined direction relative to the illumination portion and the imaging portion.

8. The optical inspection system according to claim 7, further comprising:

a color opening provided between the subject and the imaging portion, wherein
the color opening includes at least two wavelength selection regions configured to allow light beams in different wavelength spectra to selectively pass therethrough in the at least one plane,
the imaging portion is configured to receive the light beams in the different wavelength spectra passing through the wavelength selection regions, and
the processing apparatus is configured to output a defect on the surface of the subject based on a number of colors of the light beams in the wavelength spectra received by the imaging portion.

9. A subject surface image composition method, comprising:

irradiating, with a plurality of beams of illumination light traveling in different directions in at least one plane, a surface of a subject moving relative to the illumination light;
obtaining, within predetermined time, a plurality of captured images including a reference captured image by imaging the surface of the subject with an imaging portion;
shifting one or more captured images selected from the plurality of captured images; and
composing at least one subject surface image by superimposing the shifted one or more captured images on the reference captured image.

10. The subject surface image composition method according to claim 9, wherein
the shifting the captured images includes setting a shift amount of at least some of the captured images based on a frame rate of the imaging portion, a conveying speed of the subject relative to the imaging portion, and a number of pixels of the imaging portion in a direction along the conveying direction of the subject relative to the imaging portion, when the at least one subject surface image is composed.

11. The subject surface image composition method according to claim 9, further comprising:
image processing for defect identification which is performed on the at least one subject surface image.

12. A subject surface image composition program causing one or more processors to execute:

shifting one or more captured images selected from a plurality of captured images including a reference captured image,
the plurality of captured images having been obtained with an imaging portion within a predetermined time while a surface of a subject moving relative to the illumination light is irradiated with a plurality of beams of illumination light traveling in different directions in at least one plane; and
composing at least one subject surface image by superimposing the shifted one or more captured images on the reference captured image.

Imaging portion

44

42

Processing apparatus ～16

Processor ～52

Storage device ～54

14 {
24
22

C

34

Illumination portion

32

～10

Z

Y ⊗ → X

S

Conveying direction

12

F I G. 1

22

36

C

32c
32 { 32a
32b

34

Z

Y ⊗ → X

Lb

La

Lc

F I G. 2

FIG. 3

FIG. 4

26

FIG. 5

FIG. 6

FIG. 7

F I G. 8

F I G. 9

Start

$\downarrow$

S11

Acquire images of respective portions of surface of subject being conveyed through irradiation with illumination light at varying incident angle according to position of subject

$\downarrow$

S12

Generate single subject surface image by shifting portions of subject surface images

$\downarrow$

End

# F I G. 10

$\Delta$ x [pix.]

| | Third | Second | First |
|---|---|---|---|

X[pix.]

Y[pix.]

· · ·

I31        I21        I1

# F I G. 11

F I G. 12

d

1 mm

Is

# FIG. 13

Start

S11

Acquire images of respective portions of surface of subject being conveyed through irradiation with illumination light at varying incident angle according to position of subject

S12

Generate single subject surface image by shifting portions of subject surface images

S13

Generate defect identification image by subjecting subject surface image to image processing

End

# FIG. 14

F I G. 15

Conveying direction

F I G. 16

F I G. 17

Is

# F I G. 18

Conveying direction

# F I G. 19

F I G. 20

F I G. 21

Start

S21

Acquire partial image of surface of
subject being conveyed through
irradiation with illumination light at
varying incident angle according to
position of subject, and shift acquired
partial image as part of subject
surface image (by n-1 × Δx)

S22

Yes ← Rear end passed?

No

S25

Generate single subject surface image

End

S23

Acquisition of desired
length of image completed? → No

Yes

S24

Generate single subject surface image

F I G. 22

F I G. 23

FIG. 24

~ I1

~ I2

~ I3

~ I4

~ I5

F I G. 25

F I G. 26

F I G. 27

F I G. 28

Start

S31

Acquire images of respective portions of
surface of subject being conveyed through
irradiation with illumination light at varying
incident angle according to position of subject

S32

Generate partial images for defect
identification by subjecting respective
images to image processing

S33

Generate single defect identification image
of subject surface by shifting partial images
for defect identification

End

F I G. 29

F I G. 30

F I G. 31

```
         ╭─────────────╮
         │    Start    │
         ╰──────┬──────╯
                │
                ▼                          S41
  ┌─────────────────────────────────┐
  │  Acquire image through irradiation with │
  │  illumination light at varying incident angle │
  │  according to position of subject │
  └─────────────────────────────────┘
                │
                ▼                          S42
  ┌─────────────────────────────────┐
  │    Estimate inclination angle of    │
  │   subject photographed in image    │
  └─────────────────────────────────┘
                │
                ▼
         ╭─────────────╮
         │     End     │
         ╰─────────────╯
```

# F I G. 32

Europäisches
Patentamt
European
Patent Office
Office européen
des brevets

# EUROPEAN SEARCH REPORT

**Application Number**

EP 24 18 0162

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SO EDMOND WAI YAN ET AL: "3DComplete: Efficient completeness inspection using a 2.5D color scanner", COMPUTERS IN INDUSTRY, ELSEVIER, AMSTERDAM, NL, vol. 64, no. 9, 14 June 2013 (2013-06-14), pages 1237-1252, XP028767993, ISSN: 0166-3615, DOI: 10.1016/J.COMPIND.2013.03.014 | 1,4-7,9, 11,12 | INV. G06T3/4038 G06T7/00 |
| Y | * abstract * * section 2, 3 * * figures 1, 3, 10, 13 * | 2,3,8,10 | |
| Y | RUI MA ET AL: "Closed-loop Feedback Registration for Consecutive Images of Moving Flexible Targets", ARXIV.ORG, CORNELL UNIVERSITY LIBRARY, 201 OLIN LIBRARY CORNELL UNIVERSITY ITHACA, NY 14853, 20 October 2021 (2021-10-20), XP091310390, DOI: 10.1007/S10489-022-04068-0 * abstract * * page 9 * * figure 3 * | 2,3,10 | |
| Y | OHNO HIROSHI: "One-shot color mapping imaging system of light direction extracted from a surface BRDF", OSA CONTINUUM, vol. 3, no. 12, 23 November 2020 (2020-11-23), page 3343, XP093227467, ISSN: 2578-7519, DOI: 10.1364/OSAC.412058 * abstract * * section 2 * * figure 1 * | 8 | |

TECHNICAL FIELDS SEARCHED (IPC)

G06T

-/--

The present search report has been drawn up for all claims

| Place of search | Date of completion of the search | Examiner |
|---|---|---|
| Munich | 27 November 2024 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

| Application Number |
| --- |
| EP 24 18 0162 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| Y | OHNO HIROSHI ET AL: "One-shot BRDF imaging system to obtain surface properties", OPTICAL REVIEW, SPRINGER VERLAG, TOKYO, JP, vol. 28, no. 6, 6 August 2021 (2021-08-06), pages 655-661, XP037617849, ISSN: 1340-6000, DOI: 10.1007/S10043-021-00689-X [retrieved on 2021-08-06] * abstract * * section 2 * * figure 1 * ----- | 8 | |
| | | | **TECHNICAL FIELDS SEARCHED (IPC)** |

The present search report has been drawn up for all claims

| Place of search | Date of completion of the search | Examiner |
| --- | --- | --- |
| Munich | 27 November 2024 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)